# EUROPEAN PATENT APPLICATION

(11) **EP 4 422 245 A1**
(43) Date of publication of application: **28.08.2024**
(21) Application number: 21961415.3
(22) Date of filing: 21.10.2021
(51) Int. Cl.: H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2021/038951
(87) International publication number: WO 2023/067763

(57) **Abstract**

A terminal according to one aspect of the present disclosure includes a receiving section that receives configuration information for a resource set of at least one of a sounding reference signal (SRS) and a channel state information reference signal (CSI-RS), and downlink control information (DCI) for indicating a transmission configuration indication (TCI) state applicable to a plurality of signals including at least one of the SRS and the CSI-RS, and a control section that determines, based on the number of at least one of resource sets of the SRS and resource sets of the CSI-RS, a TCI state to be applied to at least one of the SRS and the CSI-RS. According to one aspect of the present disclosure, it is possible to appropriately perform TCI state indication.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to a quasi-co-location (QCL) (QCL assumption / Transmission Configuration Indication (TCI) state / spatial relation).

It is studied that a configured/activated/indicated TCI state is applied to a plurality of types of signals (channels/RSs). However, there is a case where a TCI state indication method is indefinite. Unless the TCI state indication method is definite, degradation in communication quality, reduction in throughput, and the like may occur.

Thus, an object of the present disclosure is to provide a terminal, a radio communication method, and a base station that appropriately perform TCI state indication.

### Solution to Problem

A terminal according to one aspect of the present disclosure includes a receiving section that receives configuration information for a resource set of at least one of a sounding reference signal (SRS) and a channel state information reference signal (CSI-RS), and downlink control information (DCI) for indicating a transmission configuration indication (TCI) state applicable to a plurality of signals including at least one of the SRS and the CSI-RS, and a control section that determines, based on the number of at least one of resource sets of the SRS and resource sets of the CSI-RS, a TCI state to be applied to at least one of the SRS and the CSI-RS.

### Advantageous Effects of Invention

According to one aspect of the present disclosure, it is possible to appropriately perform TCI state indication.

### Brief Description of Drawings

[FIG. 1] FIGS. 1A and 1B are diagrams to show examples of communication between a moving object and a transmission point (for example, an RRH).
[FIG. 2] FIGS. 2A to 2C are diagrams to show examples of scheme 0 to scheme 2 related to an SFN.
[FIG. 3] FIGS. 3A and 3B are diagrams to show an example of scheme 1.
[FIG. 4] FIGS. 4A to 4C are diagrams to show an example of a Doppler pre-compensation scheme.
[FIG. 5] FIG. 5 is a diagram to show an example of simultaneous beam update over a plurality of CCs.
[FIG. 6] FIGS. 6A and 6B are diagrams to show examples of a common beam.
[FIG. 7] FIG. 7 is a diagram to show an example of a MAC CE defined in Rel. 16.
[FIG. 8] FIG. 8 is a diagram to show another example of the MAC CE defined in Rel. 16.
[FIG. 9] FIG. 9 is a diagram to show another example of the MAC CE defined in Rel. 16.
[FIG. 10] FIGS. 10A and 10B are diagrams to show examples of a TCI field included in DCI.
[FIG. 11] FIG. 11 is a diagram to show an example of TCI state determination according to Embodiment 1-1.
[FIG. 12] FIG. 12 is a diagram to show an example of TCI state indication according to Embodiment 1-1.
[FIG. 13] FIG. 13 is a diagram to show an example of TCI state determination according to Embodiment 1-2.
[FIG. 14] FIG. 14 is a diagram to show an example of TCI state determination according to Embodiment 1-3.
[FIG. 15] FIG. 15 is a diagram to show an example of TCI state determination according to Embodiment 1-4.
[FIG. 16] FIG. 16 is a diagram to show an example of a method for TCI state-related switching according to Embodiment 2-1.
[FIG. 17] FIG. 17 is a diagram to show an example of a switching field according to Embodiment 3-5.
[FIG. 18] FIGS. 18A to 18D are diagrams to show examples of TCI state application in a third embodiment.
[FIG. 19] FIGS. 19A and 19B are diagrams to show examples of a switching field according to Embodiment 4-5.
[FIG. 20] FIGS. 20A to 20D are diagrams to show examples of TCI state application in a fourth embodiment.
[FIG. 21] FIGS. 21A to 21D are diagrams to show examples of TCI state application in a fifth embodiment.
[FIG. 22] FIGS. 22A to 22D are diagrams to show examples of TCI state application in a sixth embodiment.
[FIG. 23] FIGS. 23A to 23D are diagrams to show examples of TCI state application in a seventh embodiment.
[FIG. 24] FIGS. 24A to 24D are diagrams to show examples of TCI state application in an eighth embodiment.
[FIG. 25] FIG. 25 is a diagram to show an example of TCI states according to variations of the eighth embodiment.
[FIG. 26] FIGS. 26A to 26D are diagrams to show examples of TCI state application in a ninth embodiment.
[FIG. 27] FIGS. 27A to 27D are diagrams to show other examples of the TCI state application in the ninth embodiment.
[FIG. 28] FIG. 28 is a diagram to show an example of a schematic structure of a radio communication system according to one embodiment.
[FIG. 29] FIG. 29 is a diagram to show an example of a structure of a base station according to one embodiment.
[FIG. 30] FIG. 30 is a diagram to show an example of a structure of a user terminal according to one embodiment.
[FIG. 31] FIG. 31 is a diagram to show an example of a hardware structure of the base station and the user terminal according to one embodiment.
[FIG. 32] FIG. 32 is a diagram to show an example of a vehicle according to one embodiment.

### Description of Embodiments

### (TCI, Spatial Relation, QCL)

For NR, it is studied that reception processing (for example, at least one of reception, demapping, demodulation, and decoding) and transmission processing (for example, at least one of transmission, mapping, precoding, modulation, and coding), in a UE, of at least one of a signal and a channel (which is referred to as a signal/channel) is controlled based on a transmission configuration indication state (TCI state).

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

For the PDCCH and the PDSCH, a QCL type A RS may always be configured, and a QCL type D RS may be configured additionally. It is difficult to estimate a Doppler shift, a delay, and the like by using DMRS one-shot reception, and thus the QCL type A RS is used for improvement in channel estimation accuracy. The QCL type D RS is used for receive beam determination in DMRS reception.

For example, TRS 1-1, TRS 1-2, TRS 1-3, and TRS 1-4 are transmitted, and TRS 1-1 is notified as a QCL type C/D RS by a TCI state of the PDSCH. The TCI state is notified, thereby allowing the UE to use, for DMRS reception / channel estimation for the PDSCH, information obtained from a result of past periodic reception/measurement of TRS 1-1. In this case, a QCL source for the PDSCH is TRS 1-1, and a QCL target is the DMRS for the PDSCH.

### (Default TCI State / Default Spatial Relation / Default PL-RS)

In Rel. 16, the PDSCH may be scheduled by DCI having a TCI field. A TCI state for the PDSCH is indicated by the TCI field. The TCI field in DCI format 1-1 is 3 bits, and the TCI field in DCI format 1-2 is up to 3 bits.

In an RRC connected mode, if a first TCI-in-DCI information element (higher layer parameter "tci-PresentInDCI") is set to "enabled" for a CORESET for scheduling the PDSCH, the UE assumes that the TCI field is present in DCI format 1_1 for a PDCCH transmitted in the CORESET.

If a second TCI-in-DCI information element (higher layer parameter "tci-PresentInDCI-1-2") for a CORESET for scheduling the PDSCH is configured for the UE, the UE assumes that the TCI field having a DCI field size indicated by the second TCI-in-DCI information element is present in DCI format 1_2 for a PDSCH transmitted in the CORESET.

In Rel. 16, the PDSCH may be scheduled by DCI not having the TCI field. A DCI format of the DCI may be DCI format 1_0 or DCI format 1_1/1_2 in a case where an TCI-in-DCI information element (higher layer parameter "tci-PresentInDCI" or "tci-PresentInDCI-1-2") is not configured (enabled). When the PDSCH is scheduled by the DCI not having the TCI field and if time offset between reception of DL DCI (DCI for scheduling a PDSCH (scheduling DCI)) and a corresponding PDSCH (PDSCH scheduled by the DCI) is greater than or equal to a threshold value (timeDurationForQCL), the UE assumes that a TCI state or QCL assumption for the PDSCH is the same as a TCI state or QCL assumption (default TCI state) for the CORESET (for example, the scheduling DCI).

In an RRC connected mode, in both a case where an TCI-in-DCI information element (higher layer parameters "tci-PresentInDCI" and "tci-PresentInDCI-1-2") is set to "enabled" and a case where the TCI-in-DCI information element is not configured, when time offset between reception of DL DCI (DCI for scheduling a PDSCH) and a corresponding PDSCH (PDSCH scheduled by the DCI) is less than a threshold value (timeDurationForQCL) (application condition, first condition), a TCI state (default TCI state) for the PDSCH may, in a case of non-cross carrier scheduling, be a TCI state with the lowest CORESET ID in the latest slot in an active DL BWP of that CC (for a specific UL signal). Otherwise, the TCI state (default TCI state) for the PDSCH may be a TCI state with the lowest TCI state ID for a PDSCH in an active DL BWP of a CC to be scheduled.

In Rel. 15, respective ones of a PUCCH spatial relation activation/deactivation MAC CE and an SRS spatial relation activation/deactivation MAC CE are necessary. A PUSCH spatial relation follows an SRS spatial relation.

In Rel. 16, at least one of the PUCCH spatial relation activation/deactivation MAC CE and the SRS spatial relation activation/deactivation MAC CE may not be used.

If both a spatial relation and a PL-RS for a PUCCH are not configured in FR2 (application condition, second condition), default assumption for the spatial relation and the PL-RS (default spatial relation and default PL-RS) is applied to the PUCCH. If both a spatial relation and a PL-RS for an SRS (SRS resource for the SRS or SRS resource corresponding to SRI in DCI format 0_1 for scheduling a PUSCH) are not configured in FR2 (application condition, second condition), default assumption for the spatial relation and the PL-RS (default spatial relation and default PL-RS) is applied to the PUSCH scheduled by DCI format 0_1, and the SRS.

If CORESETs are configured in an active DL BWP on the CC (application condition), the default spatial relation and the default PL-RS may be a TCI state or QCL assumption for a CORESET having the lowest CORESET ID in the active DL BWP. If CORESETs are not configured in the active DL BWP on that CC, the default spatial relation and the default PL-RS may be an active TCI state having the lowest ID for a PDSCH in the active DL BWP.

In Rel. 15, a spatial relation of a PUSCH scheduled by DCI format 0_0 follows a spatial relation of a PUCCH resource out of active spatial relations of PUCCHs on the same CC, the PUCCH resource having the lowest PUCCH resource ID. A network needs to update PUCCH spatial relations on all SCells even when the PUCCH is not transmitted on the SCell.

In Rel. 16, PUCCH configuration for the PUSCH scheduled by DCI format 0_0 is unnecessary. When an active PUCCH spatial relation or a PUCCH resource for the PUSCH scheduled by DCI format 0_0 is absent on an active UL BWP in the CC (application condition, second condition), a default spatial relation and a default PL-RS are applied to the PUSCH.

A condition for application of the default spatial relation / default PL-RS for the SRS may include an information element for enabling a default beam pathloss for the SRS (higher layer parameter "enableDefaultBeamPlForSRS") set to "enabled." A condition for application of the default spatial relation / default PL-RS for the PUCCH may include an information element for enabling a default beam pathloss for the PUCCH (higher layer parameter "enableDefaultBeamPlForPUCCH") set to "enabled." A condition for application of the default spatial relation / default PL-RS for the PUSCH scheduled by DCI format 0_0 may include an information element for enabling a default beam pathloss for the PUSCH scheduled by DCI format 0_0 (higher layer parameter "enableDefaultBeamPlForPUSCH0_0") set to "enabled."

In Rel. 16, when an RRC parameter (parameter for enabling a default beam PL for PUCCH) (enableDefaultBeamPL-ForPUCCH), parameter for enabling a default beam PL for PUSCH) (enableDefaultBeamPL-ForPUSCH0_0), or parameter for enabling a default beam PL for SRS) (enableDefaultBeamPL-ForSRS)) is configured for the UE, and a spatial relation or a PL-RS is not configured for the UE, the UE applies a default spatial relation / PL-RS.

The above threshold value may be referred to as a time length (time duration) for QCL, "timeDurationForQCL," "Threshold," "Threshold for offset between a DCI indicating a TCI state and a PDSCH scheduled by the DCI," "Threshold-Sched-Offset," "beamSwitchTiming," a schedule offset threshold value, a scheduling offset threshold value, or the like. The above threshold value may be reported by the UE as a UE capability (for each subcarrier spacing).

When offset (scheduling offset) between reception of DL DCI and a PDSCH corresponding to the DL DCI is less than a threshold value "timeDurationForQCL," at least one TCI state configured for a serving cell with a scheduled PDSCH includes "QCL type D," the UE is configured with an information element for enabling 2 default TCIs (enableTwoDefaultTCIStates-r16), and at least one TCI codepoint (codepoint of a TCI field in the DL DCI) indicates two TCI states, the UE assumes that a DMRS port for the PDSCH or PDSCH transmission occasion in the serving cell is QCLed (quasi co-located) with an RS related to a QCL parameter associated with two TCI states corresponding to the lowest codepoint of TCI codepoints including two different TCI states (2 default QCL assumption determination rule). The information element for enabling 2 default TCIs indicates that Rel-16 operation with two default TCI states for a PDSCH in a case where at least one TCI codepoint is mapped to two TCI states is enabled.

As a default TCI state of a PDSCH in Rel. 15/16, specifications of a default TCI state for single TRP, a default TCI state for multi-DCI-based multi-TRP, and a default TCI state for single DCI-based multi-TRP are drafted.

As a default TCI state of an aperiodic CSI-RS (A (aperiodic)-CSI-RS) in Rel. 15/16, specifications of a default TCI state for single TRP, a default TCI state for multi-DCI-based multi-TRP, and a default TCI state for single DCI-based multi-TRP are drafted.

In Rel. 15/16, specifications of default spatial relations and default PL-RSs for respective ones of PUSCH/PUCCH/SRS are drafted.

### (Multi-TRP)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (for example, TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be used.

In NCJT, for example, TRP #1 performs modulation mapping on a first codeword, performs layer mapping, and transmits a first PDSCH in a first number of layers (for example, two layers) by using first precoding. TRP #2 performs modulation mapping on a second codeword, performs layer mapping, and transmits a second PDSCH in a second number of layers (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI, single PDCCH) (single master mode, multi-TRP based on single DCI (single-DCI based multi-TRP)). The plurality of PDSCHs from the multi-TRP may be separately scheduled by using a plurality of pieces of DCI (multi-DCI, multi-PDCCH (multiple PDCCHs)) (multi-master mode, multi-TRP based on multi-DCI (multi-DCI based multi-TRP)).

For URLLC for multi-TRP, support of PDSCH (transport block (TB) or codeword (CW)) repetition over multi-TRP is under study. Support of a scheme for repetition over multi-TRP on a frequency domain, a layer (space) domain, or a time domain (URLLC schemes, for example, schemes 1, 2a, 2b, 3, and 4) is under study. In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a high quality channel is possible.

To support intra-cell (with the same cell ID) and inter-cell (with different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of a PDCCH and a PDSCH with a plurality of TRPs.

When at least one of conditions 1 and 2 below is satisfied, the UE may determine that it is multi-TRP based on multi-DCI. In this case, a TRP may be interpreted as a CORESET pool index.

### {Condition 1}

One CORESET pool index is configured.

### {Condition 2}

Two different values (for example, 0 and 1) of a CORESET pool index are configured.

When the following condition is satisfied, the UE may determine that it is multi-TRP based on single DCI. In this case, two TRPs may be interpreted as two TCI states indicated by a MAC CE/DCI.

### {Condition}

To indicate one or two TCI states for one codepoint of a TCI field in DCI, an "enhanced TCI states activation/deactivation for UE-specific PDSCH MAC CE" is used.

DCI for common beam indication may be a UE-specific DCI format (for example, DL DCI format (for example, 1_1, 1_2)), may be a UL DCI format (for example, 0_1, 0_2), or may be a UE-group common DCI format.

### (Multi-TRP PDCCH)

For reliability of a multi-TRP PDCCH based on a non-single frequency network (SFN), study 1 to study 3 below are under study.
{Study 1} Coding / rate matching is based on one repetition, and the same code bit is repeated in another repetition.
{Study 2} Respective repetitions have the same number of control channel elements (CCEs) and the same code bit, and correspond to the same DCI payload.
{Study 3} Two or more PDCCH candidates are explicitly linked to each other. The UE recognizes the link before decoding.

Choice 1-2, choice 1-3, choice 2, and choice 3 below for PDCCH repetition are under study.

### {Choice 1-2}

Two sets of PDCCH candidates (in a given search space (SS) set) are associated with two respective TCI states of a CORESET. Here, the same CORESET, the same SS set, and PDCCH repetition in different monitoring occasions are used.

### {Choice 1-3}

Two sets of PDCCH candidates are associated with two respective SS sets. Both of the SS sets are associated with a CORESET, and each SS set is associated with only one TCI state of the CORESET. Here, the same CORESET and two SS sets are used.

### {Choice 2}

One SS set is associated with two different CORESETs.

### {Choice 3}

Two SS sets are associated with two respective CORESETs.

Thus, it is studied that two PDCCH candidates in two SS sets for PDCCH repetition are supported and the two SS sets are explicitly linked to each other.

### (SFN PDCCH)

With respect to a PDCCH/CORESET defined in Rel. 15, one TCI state without a CORESET pool index (CORESETPoolIndex) (which may be referred to as TRP information (TRP Info)) is configured for one CORESET.

With respect to PDCCH/CORESET enhancement defined in Rel. 16, a CORESET pool index is configured for each CORESET in multi-DCI based multi-TRP.

For Rel. 17 (or later versions), enhancement 1 and enhancement 2 below related to a PDCCH/CORESET are under study.

In a case where a plurality of antennas (small antennas, transmission/reception points) having the same cell ID form a single frequency network (SFN), up to two TCI states can be configured/activated for one CORESET by using higher layer signaling (RRC signaling / MAC CE) (enhancement 1). The SFN contributes to at least one of operation and reliability enhancement of an HST (high speed train).

In PDCCH repetition transmission (which may be simply referred to as "repetition"), two PDCCH candidates in two search space sets are linked to each other, and each search space set is associated with a corresponding CORESET (enhancement 2). The two search space sets may be associated with the same or different CORESETs. One (up to one) TCI state can be configured/activated for one CORESET by using higher layer signaling (RRC signaling / MAC CE).

If the two search space sets are associated with different CORESETs having different TCI states, the transmission may mean multi-TRP repetition transmission. If the two search space sets are associated with the same CORESET (CORESETs with the same TCI state), the transmission may mean single-TRP repetition transmission.

### (HST)

In LTE, arrangement of an HST (high speed train) in a tunnel is difficult. A large antenna performs transmission to the outside/inside of the tunnel. For example, transmission power of the large antenna is about 1 to 5 W. For handover, it is important to perform transmission to the outside of the tunnel before the UE enters the tunnel. For example, transmission power of a small antenna is about 250 mW. A plurality of small antennas (transmission/reception points) having the same cell ID and being separated with a distance of 300 m form a single frequency network (SFN). All small antennas in the SFN transmit the same signals at the same time on the same PRB. Assume that a terminal performs transmission/reception to/from one base station. Actually, the plurality of transmission/reception points transmit identical DL signals. In high-speed movement, transmission/reception points in units of several km form one cell. The handover is performed when moving to another cell. Therefore, frequency of the handover can be reduced.

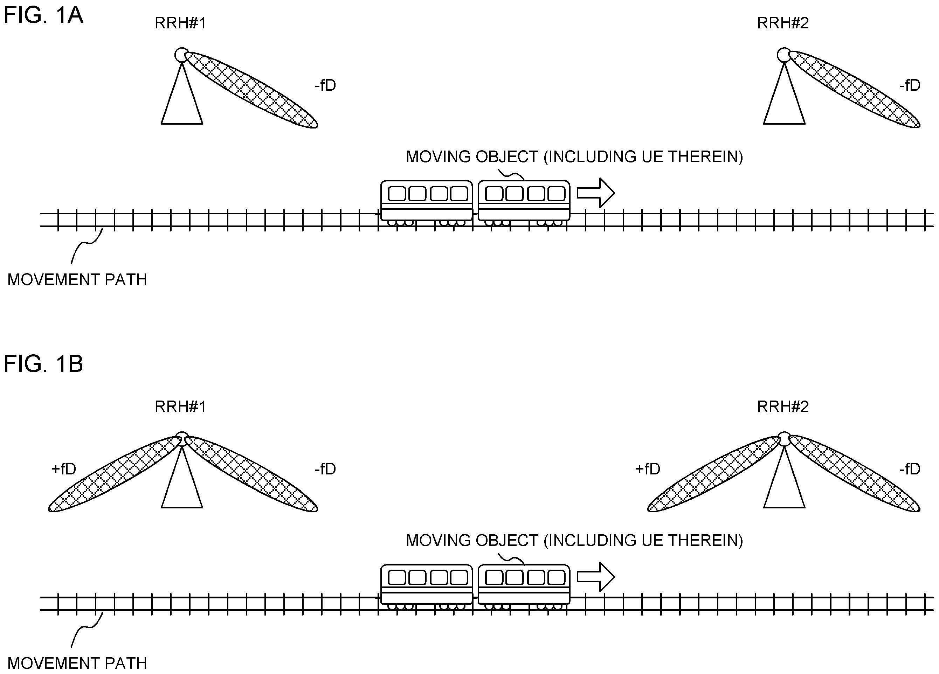

In NR, it is assumed that a beam transmitted from a transmission point (for example, an RRH) is used to perform communication with a terminal (also described hereinafter as a UE) included in a moving object (HST (high speed train)), such as a train moving at a high speed. In existing systems (for example, Rel. 15), communication with the moving object performed by transmitting a unidirectional beam from the RRH is supported (see FIG. 1A).

FIG. 1A shows a case where RRHs are arranged along a movement path (or direction of movement, direction of travel, travel path) of the moving object and where a beam is formed from each RRH towards the direction of travel of the moving object. The RRH for forming the unidirectional beam may be referred to as a uni-directional RRH. In an example shown in FIG. 1A, the moving object receives a negative Doppler shift (-f_{D}) from each RRH.

Note that FIG. 1A shows a case where the beam is formed towards the direction of travel of the moving object, but is not limited to this, and the beam may be formed towards a direction opposite to the direction of travel, or the beam may be formed towards any direction regardless of the direction of travel of the moving object.

In Rel. 16 (or later versions), it is also assumed that a plurality of (for example, two or more) beams are transmitted from the RRH. For example, it is assumed that beams are formed towards both a direction of travel of the moving object and the opposite direction (see FIG. 1B).

FIG. 1B shows a case where RRHs are installed along a movement path of the moving object and where beams are formed from each RRH towards both the direction of travel of the moving object and a direction opposite to the direction of travel. The RRH for forming a multidirectional (for example, bi-directional) beam may be referred to as a bi-directional RRH.

In the HST, the UE performs communication in a manner similar to that in a single TRP. In base station implementation, transmission from a plurality of TRPs (same cell IDs) can be performed.

In an example in FIG. 1B, when two RRHs (here, RRH #1 and RRH #2) use the SFN, the moving object switches, in the middle of the two RRHs, from a signal with a received negative Doppler shift, to a signal with a received positive Doppler shift, which causes power increase. In this case, a maximum width of a Doppler shift change requiring compensation is a change from -f_{D} to +f_{D}, and doubles as compared with that of the unidirectional RRH.

Note that in the present disclosure, the positive Doppler shift may be interpreted as information related to a positive Doppler shift, a Doppler shift in a positive direction, or Doppler information in a positive direction. The negative Doppler shift may be interpreted as information related to a negative Doppler shift, a Doppler shift in a negative direction, or Doppler information in a negative direction.

Here, as HST schemes, scheme 0 to scheme 2 (HST scheme 0 to HST scheme 2) below will be compared with each other.

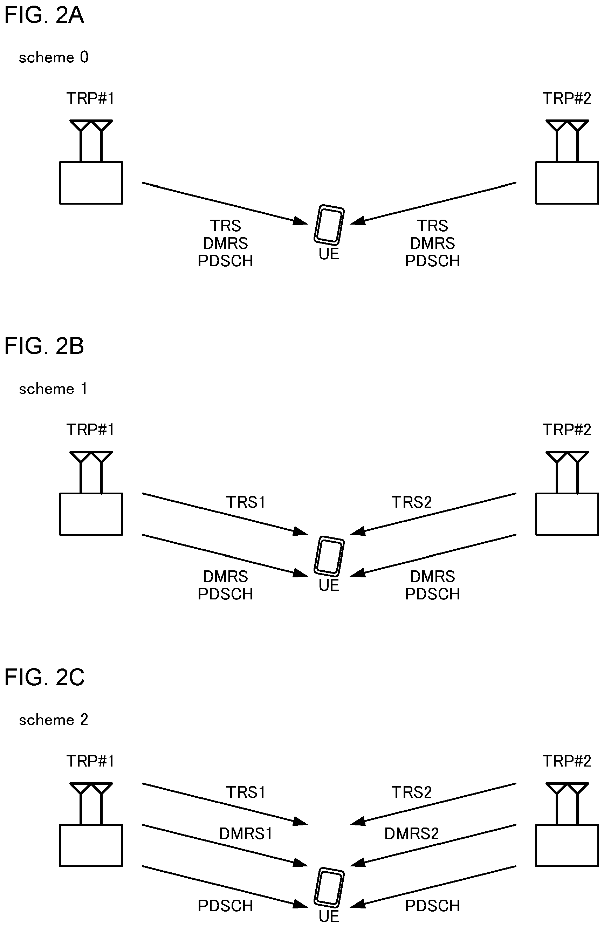

In scheme 0 in FIG. 2A, a tracking reference signal (TRS), a DMRS, and a PDSCH are transmitted in common with two TRPs (RRHs) (by using the same time and frequency resources) (normal SFN, transparent SFN, HST-SFN) .

In scheme 0, the UE receives a DL channel/signal by using the equivalent of the single TRP, and thus a TCI state for the PDSCH is one.

Note that in Rel. 16, an RRC parameter for distinction between transmission using the single TRP and transmission using the SFN is defined. When reporting corresponding UE capability information, the UE may distinguish, based on the RRC parameter, between reception of the DL channel/signal with the single TRP and reception of the PDSCH with assumption of the SFN. On the other hand, the UE may perform transmission/reception using the SFN by assuming the single TRP.

In scheme 1 in FIG. 2B, the TRS is transmitted in a TRP-specific manner (by using a time/frequency resource varying depending on a TRP). In this example, TRS 1 is transmitted from TRP #1, and TRS 2 is transmitted from TRP #2.

In scheme 1, the UE receives a DL channel/signal from each TRP by using a TRS from each TRP, and thus TCI states for the PDSCH are two.

In scheme 2 in FIG. 2C, the TRS and the DMRS are transmitted in a TRP-specific manner. In this example, TRS 1 and DMRS 1 are transmitted from TRP #1, and TRS 2 and DMRS 2 are transmitted from TRP #2. Scheme 1 and scheme 2 can suppress a quick change of a Doppler shift and can appropriately estimate/compensate the Doppler shift, as compared with scheme 0. The DMRS in scheme 2 increases more than the DMRS in scheme 1, and thus maximum throughput in scheme 2 is lower than that in scheme 1.

In scheme 0, the UE performs switching between the single TRP and the SFN, based on higher layer signaling (RRC information element / MAC CE) .

The UE may perform switching between scheme 1 / scheme 2 / NW pre-compensation scheme, based on the higher layer signaling (RRC information element / MAC CE).

In scheme 1, two TRS resources are configured for respective ones of a direction of travel of the HST and the opposite direction.

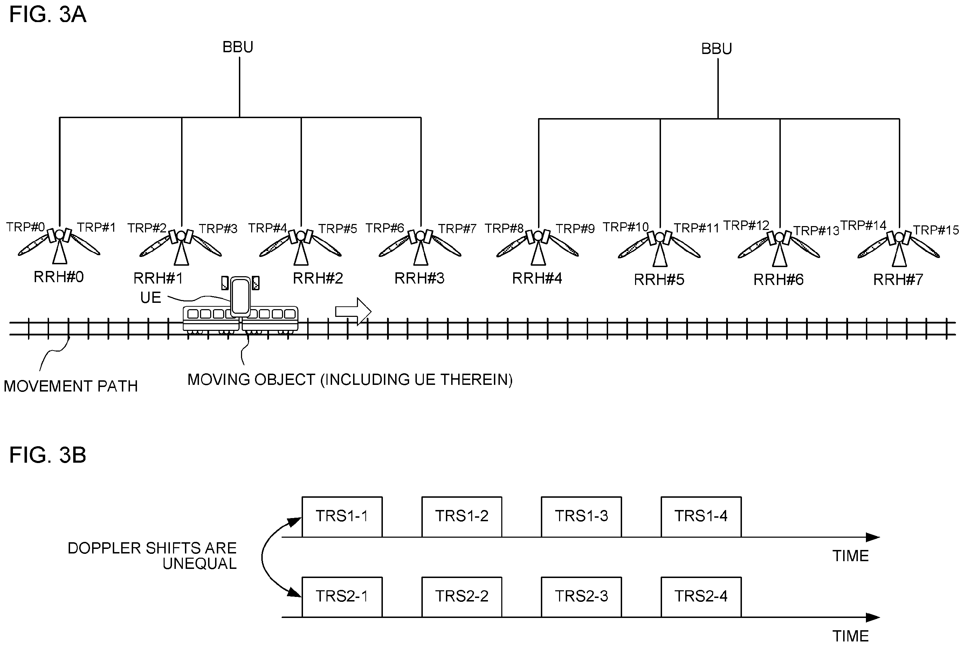

In an example in FIG. 3A, TRPs (TRPs #0, #2, ...) for transmitting DL signals towards the opposite direction of the HST transmit a first TRS (TRS arriving from in front of the HST) in identical time and frequency resources (SFN). TRPs (TRPs #1, #3, ...) for transmitting DL signals towards the direction of travel of the HST transmit a second TRS (TRS arriving from behind the HST) in identical time and frequency resources (SFN). The first TRS and the second TRS may be transmitted/received by using different frequency resources.

In an example in FIG. 3B, TRSs 1-1 to 1-4 are transmitted as the first TRS, and TRSs 2-1 to 2-4 are transmitted as the second TRS.

Considering beam management, the first TRS is transmitted by using 64 beams and 64 time resources, and the second TRS is transmitted by using 64 beams and 64 time resources. It is conceivable that a beam of the first TRS and a beam of the second TRS are equal to each other (QCL type D RSs are equal to each other). Multiplexing the first TRS and the second TRS in identical time resources and different frequency resources can enhance resource use efficiency.

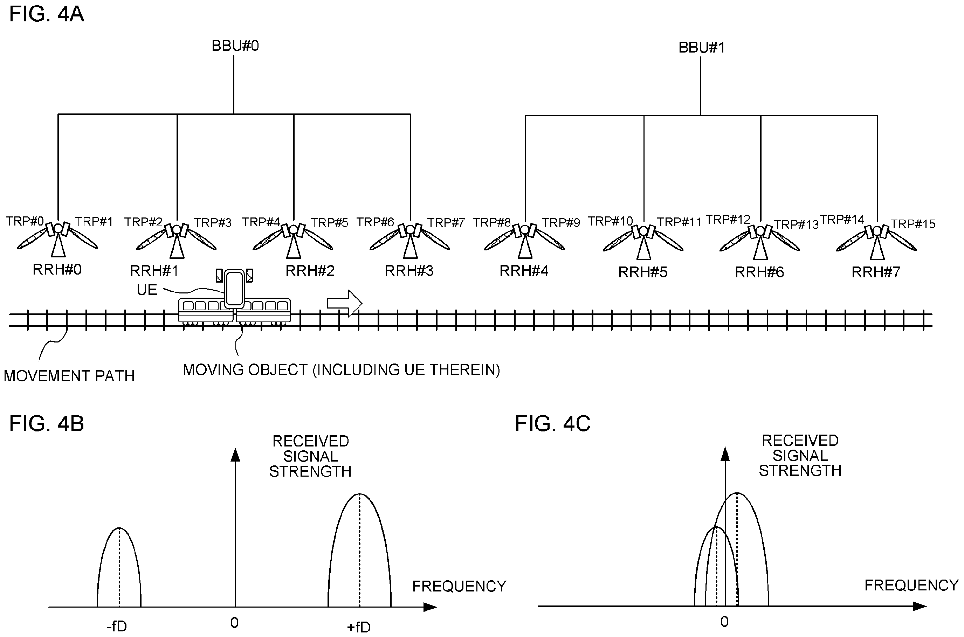

In an example in FIG. 4A, RRHs #0 to #7 are arranged along a movement path of the HST. RRHs #0 to #3 and RRHs #4 to #7 are connected to base band unit (BBU) #0 and BBU #1, respectively. Each RRH is a bi-directional RRH, and forms beams towards both the direction of travel and the opposite direction on the movement path by using each transmission/reception point (TRP).

In a received signal in an example in FIG. 4B (single TRP (SFN) / scheme 1), when the UE receives a signal/channel transmitted from TRP #2n-1 (n is an integer being 0 or more) (beam in the direction of travel of the HST, beam from behind the UE), negative Doppler shift (in this example, -fD) occurs. When the UE receives a signal/channel transmitted from TRP #2n (n is an integer being 0 or more) (beam in a direction opposite to the direction of travel of the HST, beam from in front of the UE), positive Doppler shift (in this example, +fD) occurs.

For Rel. 17 (or later versions), it is studied that a base station performs a Doppler pre- (preliminary) compensation (correction) scheme (Pre-Doppler Compensation scheme, Doppler pre-Compensation scheme, network (NW) pre-compensation scheme (NW pre-compensation scheme, HST NW pre-compensation scheme), TRP pre-compensation scheme, TRP-based pre-compensation scheme) in downlink (DL) signal/channel transmission from a TRP to a UE in an HST. The TRP performs Doppler compensation beforehand when performing DL signal/channel transmission to the UE, thereby allowing an impact of Doppler shift in DL signal/channel reception in the UE to be reduced. In the present disclosure, the Doppler pre-compensation scheme may be a combination of scheme 1 and Doppler shift pre-compensation by the base station.

For the Doppler pre-compensation scheme, it is studied that a TRS from each TRP is transmitted without Doppler pre-compensation for the TRS and a PDSCH from each TRP is transmitted with Doppler pre-compensation for the PDSCH.

In the Doppler pre-compensation scheme, a TRP for forming a beam towards the direction of travel on the movement path and a TRP for forming a beam towards the direction opposite to the direction of travel on the movement path perform DL signal/channel transmission to the UE in the HST after performing Doppler compensation. In this example, TRP #2n-1 performs positive Doppler compensation, and TRP #2n performs negative Doppler compensation, thereby reducing an impact of Doppler shift in signal/channel reception by the UE (FIG. 4C).

Note that in a situation shown in FIG. 4C, the UE receives a DL channel/signal from each TRP by using a TRS from each TRP, and thus TCI states for the PDSCH may be two.

Furthermore, for Rel. 17 (or later versions), dynamic switching, with a TCI field (TCI state field), between the single TRP and the SFN is under study. For example, one or two TCI states are configured/indicated in each TCI codepoint (codepoint of the TCI field, DCI codepoint) by using an RRC information element / MAC CE (for example, Enhanced TCI States Activation/Deactivation for UE-specific PDSCH MAC CE) / DCI (TCI field). The UE may determine that a PDSCH from the single TRP is received when one TCI state is configured/indicated. The UE may determine that a PDSCH from the SFN using multi-TRP is received when two TCI states are configured/indicated.

### (Simultaneous Beam Update Over Plurality of CCs)

In Rel. 16, one MAC CE can update beam indices (TCI states) of a plurality of CCs.

The UE can be configured with up to two applicable CC lists (for example, applicable-CC-list) by RRC. When two applicable CC lists are configured, the two applicable CC lists may correspond to respective ones of inter-band CA in FR1 and inter-band CA in FR2.

An activation MAC CE for a TCI state of a PDCCH activates TCI states associated with the same CORESET ID in all the BWPs/CCs in an applicable CC list.

An activation MAC CE for a TCI state of a PDSCH activates TCI states in all the BWPs/CCs in the applicable CC list.

An activation MAC CE for a spatial relation of an A-SRS/SP-SRS activates spatial relations associated with the same SRS resource ID in all the BWPs/CCs in the applicable CC list.

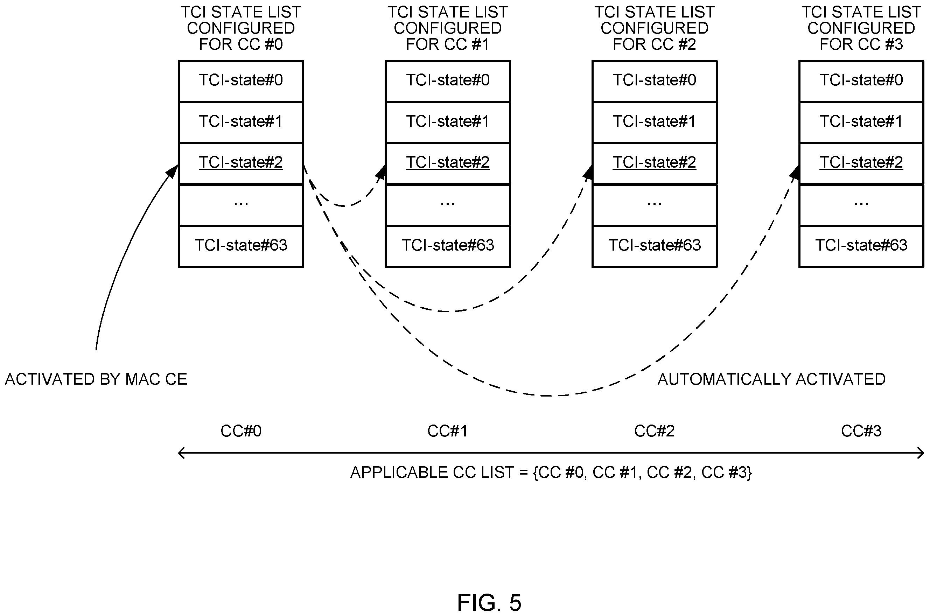

In an example in FIG. 5, the UE is configured with an applicable CC list indicating CCs #0, #1, #2, and #3 and a list indicating 64 TCI states for a CORESET or a PDSCH in each of the CCs. When one TCI state in CC #0 is activated by a MAC CE, corresponding TCI states are activated in CCs #1, #2, and #3.

It is studied that such simultaneous beam update is applicable only to a single-TRP case.

For a PDSCH, the UE may be based on Procedure A below.

### {Procedure A}

The UE receives an activation command for mapping up to eight TCI states to a codepoint of a DCI field (TCI field) in one CC / DL BWP or in one set of CCs/BWPs. When one set of TCI state IDs is activated for one set of CCs / DL BWPs, an applicable CC list is determined by a CC(s) indicated in an activation command, and a set of TCI states being the same is applied to all the DL BWPs in the indicated CC. Only if the UE is not provided with a plurality of different values of CORESET pool indices (CORESETPoolIndex) in a CORESET information element (ControlResourceSet) and is not provided with at least one TCI codepoint mapped to two TCI states, the one set of TCI state IDs can be activated for one set of CCs / DL BWPs.

For a PDCCH, the UE may be based on Procedure B below.

### {Procedure B}

If the UE is provided with up to two lists of cells for simultaneous TCI state activation by a simultaneous TCI update list (at least one of simultaneousTCI-UpdateList-r16 and simultaneousTCI-UpdateListSecond-r16), by a simultaneous TCI cell list (simultaneousTCI-CellList), the UE applies, to CORESETs with an index p in all the configured DL BWPs in all the configured cells in one list determined based on a serving cell index provided by a MAC CE command, an antenna port quasi co-location (QCL) provided by TCI states with the same activated TCI state ID value. Only if the UE is not provided with a plurality of different values of CORESET pool indices (CORESETPoolIndex) in a CORESET information element (ControlResourceSet) and is not provided with at least one TCI codepoint mapped to two TCI states, the UE can be provided with a simultaneous TCI cell list for simultaneous TCI state activation.

For a semi-persistent (SP) / aperiodic (AP)-SRS, the UE may be based on Procedure C below.

### {Procedure C}

When an SP configured by an SRS resource information element (higher layer parameter "SRS-Resource") or spatial relation information (spatialRelationInfo) for an AP-SRS resource is activated/updated by a MAC CE for one set of CCs/BWPs, an applicable CC list is indicated by a simultaneous spatial update list (higher layer parameter "simultaneousSpatial-UpdateList-r16 or simultaneousSpatial-UpdateListSecond-r16), and the spatial relation information is applied to SPs or AP-SRS resources with the same SRS resource ID in all the BWPs in the indicated CC. Only if the UE is not provided with a plurality of different values of CORESET pool indices (CORESETPoolIndex) in a CORESET information element (ControlResourceSet) and is not provided with at least one TCI codepoint mapped to two TCI states, the SP configured by the SRS resource information element (higher layer parameter "SRS-Resource") or spatial relation information (spatialRelationInfo) for the AP-SRS resource is activated/updated by an MAC CE for the one set of CCs/BWPs.

The simultaneous TCI cell list (simultaneousTCI-CellList) and the simultaneous TCI update list (at least one of simultaneousTCI-UpdateList1-r16 and simultaneousTCI-UpdateList2-r16) are lists of serving cells for which a TCI relationship can be updated simultaneously by using a MAC CE. simultaneousTCI-UpdateList1-r16 and simultaneousTCI-UpdateList2-r16 do not include the same serving cell.

The simultaneous spatial update list (at least one of higher layer parameters "simultaneousSpatial-UpdatedList1-r16" and "simultaneousSpatial-UpdatedList2-r16") is a list of serving cells for which a spatial relationship can be updated simultaneously by using a MAC CE. simultaneousSpatial-UpdatedList1-r16 and simultaneousSpatial-UpdatedList2-r16 do not include the same serving cell.

Here, the simultaneous TCI update list and the simultaneous spatial update list are configured by RRC, a CORESET pool index of a CORESET is configured by RRC, and a TCI codepoint mapped to TCI state(s) is indicated by a MAC CE.

### (Unified/common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or may apply a common beam for UL and a common beam for DL to all the UL channels and all the DL channels, respectively.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume different TCI states (separate TCI states, separate TCI pools, UL separate TCI pool and DL separate TCI pool, separate common TCI pools, UL common TCI pool and DL common TCI pool) for respective ones of UL and DL.

By MAC CE-based beam management (MAC CE level beam indication), default UL and DL beams may be aligned. A default TCI state of a PDSCH may be updated to match to a default UL beam (spatial relation).

By DCI-based beam management (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to a UL channel/RS and the number M (≥ 1) of TCI states (DL TCI states) applied to a DL channel/RS may be defined. At least one of N and M may be notified/configured/indicated for the UE via higher layer signaling / physical layer signaling.

In the present disclosure, description "N = M = X (X is an arbitrary integer)" may mean that X TCI states (joint TCI states) (corresponding to X TRPs) common to UL and DL are notified/configured/indicated for the UE.

Also, description "N = X (X is an arbitrary integer), M = Y (Y is an arbitrary integer, Y may be equal to X)" may mean that X UL TCI states (corresponding to X TRPs) and Y DL TCI states (corresponding to Y TRPs) are notified/configured/indicated for the UE. The UL TCI state and the DL TCI state may mean a TCI state common to UL and DL (in other words, a joint TCI state), or may mean TCI states for respective ones of UL and DL (in other words, separate TCI states).

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

For example, description "N = 2, M = 1" may mean that two TCI states common to UL and DL are notified/configured/indicated for the UE. In this case, the UE may use the two configured/indicated TCI states as UL TCI states, and may use one TCI state of the two configured/indicated TCI states as a DL TCI state.

For example, description "N = 2, M = 1" may mean that two UL TCI states and one DL TCI state are notified/configured/indicated as separate TCI states for the UE.

Note that in the above examples, cases where N and M values are 1 or 2 are described, but the N and M values may be 3 or more, and N and M may be different from each other.

A case of M > 1 / N > 1 may indicate at least one of a TCI state indication for multi-TRP and a plurality of TCI state indications for inter-band CA.

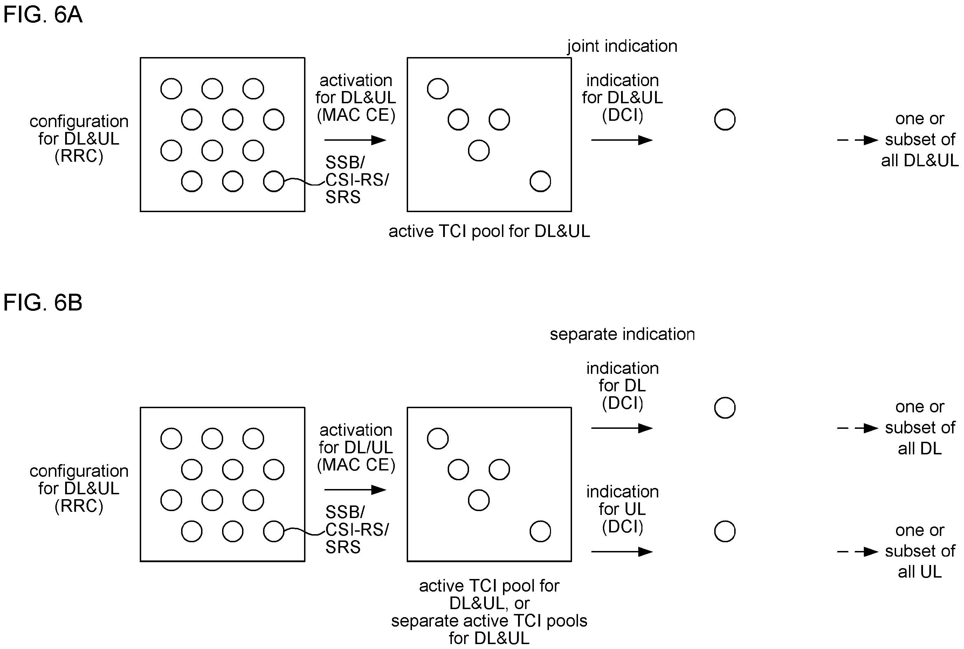

In an example in FIG. 6A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 6A, one dot may be one TCI state applied to both UL and DL, or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In an example in FIG. 6B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using TCI state operation (TCI framework) in Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

Existing DCI format 1_1/1_2 may be used for indication of a common TCI state.

A common TCI framework may include separate TCI states for DL and UL.

### (MAC CE)

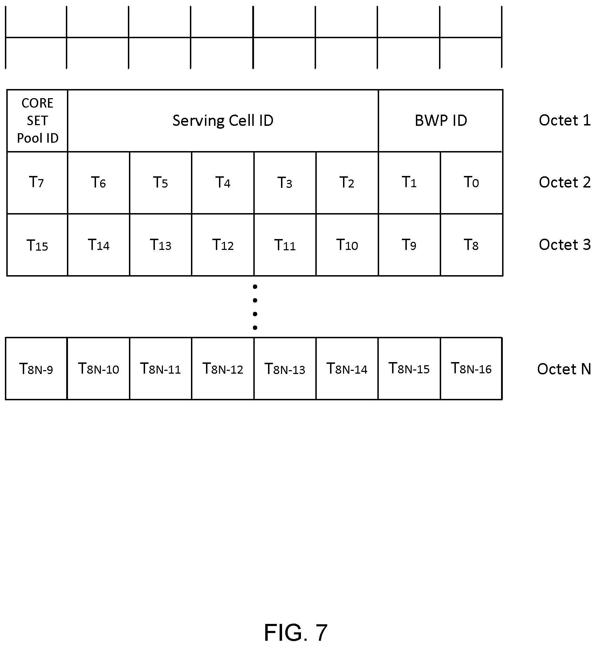

In Rel. 16, a MAC CE (TCI states Activation/Deactivation for UE-specific PDSCH MAC CE) is used for TCI state activation/deactivation for a UE-specific PDSCH (see FIG. 7).

The MAC CE is identified by a MAC sub-header having a Logical Channel ID (LCID).

The MAC CE may be used in an environment in which a single TRP or multi-TRP based on multi-DCI are used.

The MAC CE may include a serving cell ID field, a BWP ID field, a field (Ti) for indicating TCI state activation/deactivation, and a CORESET pool ID field.

The serving cell ID field may be a field for indicating a serving cell to which the MAC CE is applied. The BWP ID field may be a field for indicating a DL BWP to which the MAC CE is applied. The CORESET pool ID field may be a field indicating that correspondence (mapping) between an activated TCI state and a codepoint of a TCI field (codepoint of a DCI TCI) indicated by DCI set with field Ti is specific to ControlResourceSetId configured with a CORESET pool ID.

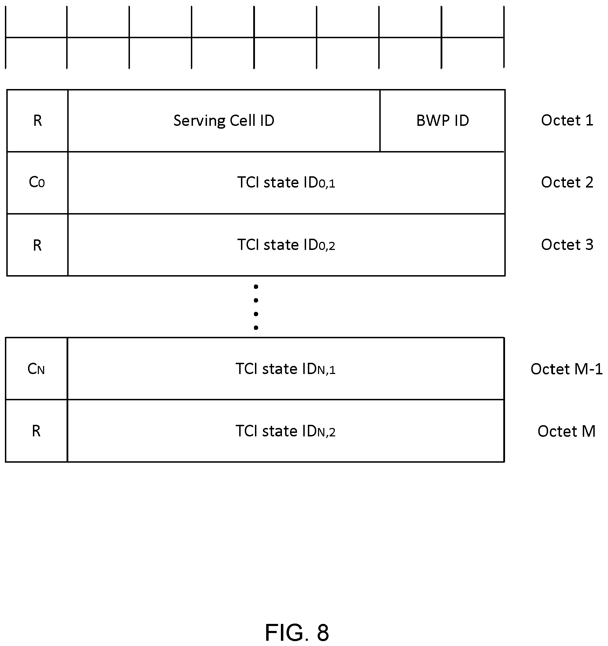

In Rel. 16, a MAC CE (Enhanced TCI states Activation/Deactivation for UE-specific PDSCH MAC CE) is used for TCI state activation/deactivation for a UE-specific PDSCH (see FIG. 8).

The MAC CE is identified by a MAC PDU sub-header having an eLCID.

The MAC CE may be used in an environment in which multi-TRP based on single DCI are used.

The MAC CE may include a serving cell ID field, a BWP ID field, a field for indicating a TCI state identified by TCI-StateID (TCI state IDi,j (i is an integer from 0 to N, and j is 1 or 2)), a field (Ci) indicating whether TCI state IDi,2 is present in a corresponding octet, and a reserved bit field (set to R, 0).

"i" may correspond to an index of a codepoint of a TCI field indicated by DCI. "TCI state IDi,j" may indicate the j th TCI state of a codepoint of the i th TCI field.

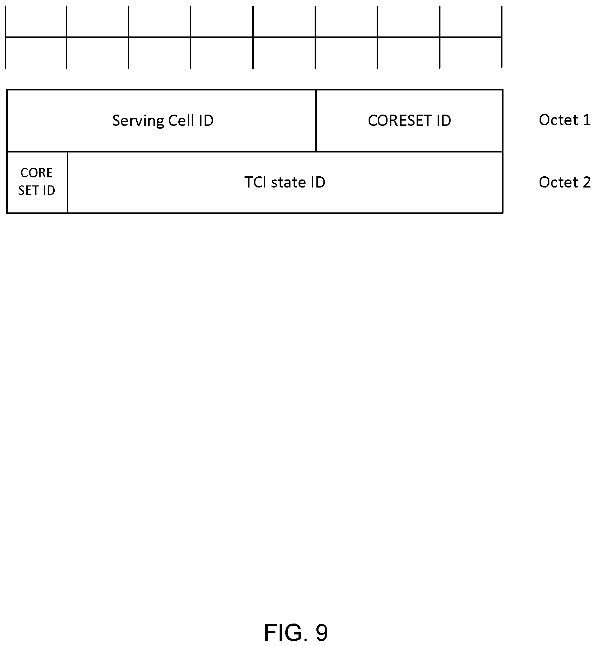

In Rel. 16, a MAC CE (TCI state Indication for UE-specific PDCCH MAC CE) is used for TCI state activation/deactivation for a UE-specific PDCCH/CORESET (see FIG. 9).

The MAC CE is identified by a MAC sub-header having an LCID.

The MAC CE may include a serving cell ID field, a field indicating a CORESET (CORESET ID) for which a TCI state is indicated, and a field (TCI state ID) for indicating a TCI state applicable to a CORESET identified by a CORESET ID.

### (Analysis)

In a unified TCI state framework in Rel. 17 (or later versions), a joint DL/UL TCI state and a DL TCI state (DL separate TCI state) may be applied to signal/channel reception below:
- Reception of UE-dedicated PDSCH
- Reception of part (subset) / all of UE-dedicated CORESET
- Reception of non-UE-dedicated CORESET and related PDSCH
- Reception of aperiodic (AP) CSI-RS for channel measurement information (CSI)
- Reception of AP-CSI-RS for beam management

In a unified TCI state framework in Rel. 17 (or later versions), a joint DL/UL TCI state and a UL TCI state (UL separate TCI state) may be applied to signal/channel transmission below by the UE:
- PUSCH based on dynamic grant (DCI) / configured grant
- Part (subset) / all of UE-dedicated PUCCH resource
- Some (subset) / all SRS resources in resource set configured for at least one of antenna switching, codebook-based UL transmission, and non-codebook-based UL transmission
- AP SRS for beam management
- Non-UE-dedicated PUCCH
- Non-UE-dedicated PUSCH

Thus, in a case where a configured/activated/indicated TCI state is applied to a plurality of types of signals (channels/RSs), there is a case where a TCI state configuration/indication method is indefinite. Unless the TCI state configuration/indication method is definite, degradation in communication quality, reduction in throughput, and the like may occur.

Thus, the inventors of the present invention came up with the idea of a method for appropriately configuring/indicating/applying a TCI state even when a TCI state is applied to a plurality of types of signals/channels.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, a sequence, a list, a set, a group, a cluster, a subset, and the like may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), an RRC message, and configuration may be interchangeably interpreted.

The MAC signaling may use, for example, a MAC control element (MAC CE), a MAC Protocol Data Unit (PDU), or the like. In the present disclosure, a MAC CE, an update command, and an activation/deactivation command may be interchangeably interpreted.

The broadcast information may be, for example, a master information block (MIB), a system information block (SIB), minimum system information (Remaining Minimum System Information (RMSI), SIB 1), other system information (OSI), or the like.

In the present disclosure, a beam, a spatial domain filter, a spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state / QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), a base station, an antenna port for a certain signal (for example, a demodulation reference signal (DMRS) port), a DMRS, an antenna port group for a certain signal (for example, a DMRS port group), a group for multiplexing (for example, a code division multiplexing (CDM) group, a reference signal group, or a CORESET group), a Physical Uplink Control Channel (PUCCH) group, a PUCCH resource group, a resource (for example, a reference signal resource or an SRS resource), a resource set (for example, a reference signal resource set), a CORESET pool, a CORESET subset, a downlink Transmission Configuration Indication state (TCI state) (DL TCI state), an uplink TCI state (UL TCI state), a unified TCI state, a common TCI state, quasi-co-location (QCL), QCL assumption, a redundancy version (RV), and a layer (multi-input muti-output (MIMO) layer, transmission layer, spatial layer) may be interchangeably interpreted. A panel Identifier (ID) and a panel may be interchangeably interpreted. In the present disclosure, a TRP ID and a TRP may be interchangeably interpreted.

The panel may be related to at least one of a group index of an SSB/CSI-RS group, a group index of group-based beam report, and a group index of an SSB/CSI-RS group for group-based beam report.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, it may be assumed that a single PDCCH (DCI) is supported when multi-TRP uses ideal backhaul. It may be assumed that multi-PDCCH (DCI) is supported when multi-TRP uses non-ideal backhaul.

Note that the ideal backhaul may be referred to as DMRS port group type 1, reference signal related group type 1, antenna port group type 1, CORESET pool type 1, and the like. The non-ideal backhaul may be referred to as DMRS port group type 2, reference signal related group type 2, antenna port group type 2, CORESET pool type 2, and the like. The names are not limited to these.

In the present disclosure, a single TRP, a single-TRP system, single-TRP transmission, and a single PDSCH may be interchangeably interpreted. In the present disclosure, multi-TRP (multiple TRPs), a multi-TRP system, multi-TRP transmission, and multi-PDSCH may be interchangeably interpreted. In the present disclosure, single DCI, a single PDCCH, multi-TRP based on single DCI, and two TCI states in at least one TCI codepoint being activated may be interchangeably interpreted.

In the present disclosure, a single TRP, a channel using a single TRP, a channel using one TCI state / spatial relation, multi-TRP being not enabled by RRC/DCI, a plurality of TCI states / spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, TRP #1 (first TRP) may correspond to CORESET pool index = 0, or may correspond to a first TCI state of two TCI states corresponding to one codepoint of a TCI field. TRP #2 (second TRP) TRP #1 (first TRP) may correspond to CORESET pool index = 1, or may correspond to a second TCI state of the two TCI states corresponding to one codepoint of the TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

QCL in the present disclosure may be interchangeably interpreted as QCL type D.

In the present disclosure, "TCI state A is of the same QCL type D as that of TCI state B," "TCI state A and TCI state B are the same," "TCI state A is QCL type D with TCI state B," and the like may be interchangeably interpreted.

In the present disclosure, a codepoint of a DCI field 'Transmission Configuration Indication,' a TCI codepoint, a DCI codepoint, and a codepoint of a TCI field may be interchangeably interpreted.

In the present disclosure, a single TRP and an SFN may be interchangeably interpreted. In the present disclosure, an HST, an HST scheme, a scheme for high-speed movement, scheme 1, scheme 2, an NW pre-compensation scheme, HST scheme 1, HST scheme 2, and an HST NW pre-compensation scheme may be interchangeably interpreted.

In the present disclosure, a PDSCH/PDCCH using a single TRP may be interpreted as a single TRP-based PDSCH/PDCCH or a single TRP PDSCH/PDCCH. In the present disclosure, a PDSCH/PDCCH using an SFN may be interpreted as a PDSCH/PDCCH using multiple SFNs, a PDSCH/PDCCH based on an SFN, or an SFN PDSCH/PDCCH.

In the present disclosure, DL signal (PDSCH/PDCCH) reception using an SFN may mean reception using identical time/frequency resources and/or reception of identical data (PDSCHs) / control information (PDCCHs) from a plurality of transmission/reception points. The DL signal reception using the SFN may mean reception using identical time/frequency resources and/or reception, with a plurality of TCI states / spatial domain filters / beams / QCLs, of identical data / control information.

In the present disclosure, an HST-SFN scheme, an SFN scheme in Rel. 17 (or later versions), a new SFN scheme, a new HST-SFN scheme, an HST-SFN scenario in Rel. 17 (or later versions), an HST-SFN scheme for an HST-SFN scenario, an SFN scheme for an HST-SFN scenario, scheme 1, HST-SFN scheme A/B, HST-SFN type A/B, a Doppler pre-compensation scheme, and at least one of scheme 1 (HST scheme 1) and the Doppler pre-compensation scheme may be interchangeably interpreted.

In the present disclosure, the Doppler pre-compensation scheme, a base station pre-compensation scheme, a TRP pre-compensation scheme, a pre-Doppler compensation scheme, a Doppler pre-compensation scheme, an NW pre-compensation scheme, an HST NW pre-compensation scheme, a TRP pre-compensation scheme, a TRP-based pre-compensation scheme, HST-SFN scheme A/B, and HST-SFN type A/B may be interchangeably interpreted. In the present disclosure, the pre-compensation scheme, a reduction scheme, an improvement scheme, and a correction scheme may be interchangeably interpreted.

In the present disclosure, PDCCHs / search spaces (SSs) / CORESETs having a linkage, PDCCHs/SSs/CORESETs linked to each other, and a pair of PDCCHs/SSs/CORESETs may be interchangeably interpreted. In the present disclosure, PDCCHs/SSs/CORESETs not having a linkage, PDCCHs/SSs/CORESETs not linked to each other, and individual PDCCHs/SSs/CORESETs may be interchangeably interpreted.

In the present disclosure, two CORESETs linked to each other for PDCCH repetition and two CORESETs associated with two respective SS sets linked to each other may be interchangeably interpreted.

In the present disclosure, SFN-PDCCH repetition, PDCCH repetition, two PDCCHs linked to each other, and one piece of DCI received over two search spaces (SSs) / CORESETs linked to each other may be interchangeably interpreted.

In the present disclosure, PDCCH repetition, SFN-PDCCH repetition, PDCCH repetition for higher reliability, a PDCCH for higher reliability, a PDCCH for reliability, and two PDCCHs linked to each other may be interchangeably interpreted.

In the present disclosure, a PDCCH reception method, PDCCH repetition, SFN-PDCCH repetition, HST-SFN, and an HST-SFN scheme may be interchangeably interpreted.

In the present disclosure, a PDSCH reception method, a single DCI-based multi-TRP, and an HST-SFN scheme may be interchangeably interpreted.

In the present disclosure, single DCI-based multi-TRP repetition may be NCJT for an enhanced mobile broadband (eMBB) service (low priority, priority 0), or may be repetition for a URLLC service of an ultra-reliable and low latency communications service (high priority, priority 1).

In the present disclosure, "little," "small," "short," and "low" may be interchangeably interpreted. In the present disclosure, ignore, drop, and the like may be interchangeably interpreted.

In the present disclosure, "highest (maximum)" and "lowest (minimum)" may be interchangeably interpreted. In the present disclosure, "maximum" may be interpreted as "the n th (n is an arbitrary natural number)" largest, larger, higher, or the like, and vice versa. In the present disclosure, "minimum" may be interpreted as "the n th (n is an arbitrary natural number) smallest," smaller, lower, or the like, and vice versa. In the present disclosure, "earlier," "later," and "latest" may be interchangeably interpreted. In the present disclosure, "start" and "end" may be interchangeably interpreted.

In the present disclosure, repetition, repetition transmission, and repetition reception may be interchangeably interpreted.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UL signal, a UL signal/channel, transmission/reception of a UL signal/channel, UL reception, and UL transmission may be interchangeably interpreted.

### (Radio Communication Method)

For a UE, one or more (N) UL TCI states and one or more (M) DL TCI states may be indicated.

For example, one or more (a plurality of) TCI states may be indicated for the UE by using DCI.

A format of the DCI for indicating the TCI states may be a DCI format including a TCI field (for example, DCI format 1_1/1_2).

For example, the DCI may include a plurality of TCI fields for indicating a plurality of TCI states. The UE may determine, based on the plurality of TCI fields, one or more (N) UL TCI states and one or more (M) DL TCI states.

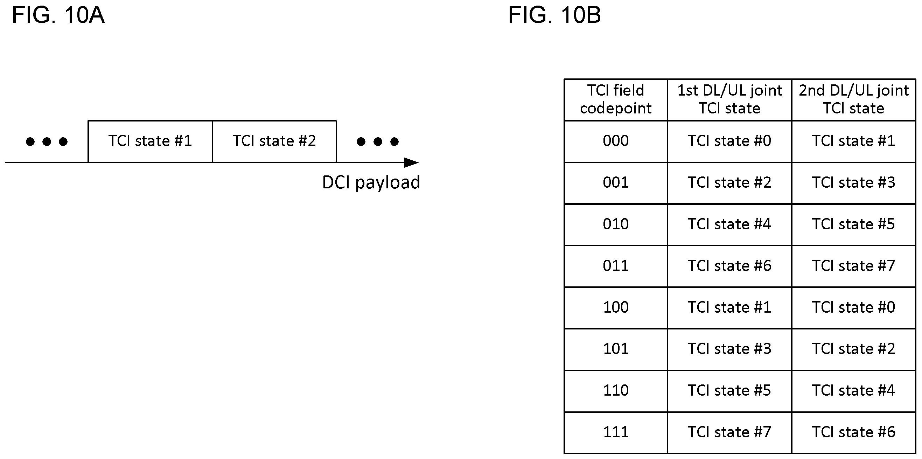

FIG. 10A is a diagram to show an example of the TCI field included in the DCI. In FIG. 10A, the DCI includes a plurality of TCI fields for indicating TCI states (in the example in FIG. 10A, TCI field #1 and TCI field #2). The UE may determine, based on the TCI fields, one or more UL TCI states and one or more DL TCI states.

For example, the DCI may include one TCI field for indicating a plurality of TCI states. The UE may determine, based on the plurality of TCI fields, one or more (N) UL TCI states and one or more (M) DL TCI states.

FIG. 10B is a diagram to show another example of the TCI field included in the DCI. Such correspondence between a codepoint of the TCI field and a plurality of TCI states as that shown in FIG. 10B may be preconfigured for the UE. The UE may determine, based on (a codepoint of) the TCI field included in the DCI, one or more UL TCI states and one or more DL TCI states. For example, when the TCI field included in the DCI indicates "100," the UE determines that a first joint TCI state is TCI state #1 and that a second joint TCI state is TCI state #0.

Note that in the example shown in FIG. 10B, the first joint TCI state and the second joint TCI state are described as TCI states corresponding to a codepoint of the TCI field, but TCI states corresponding to a TCI codepoint may be separate TCI states.

For example, the DCI may include a plurality of TCI fields for indicating a plurality of TCI states. The UE may determine, based on the plurality of TCI fields, one or more (N) UL TCI states and one or more (M) DL TCI states.

A format of the DCI for indicating the TCI states may be a first DCI format (for example, a DCI format for scheduling a PDSCH (for example, DCI format 1_1/1_2) and a second DCI format (for example, a DCI format for scheduling a PUSCH (for example, DCI format 0_1/0_2).

Based on the first DCI format, a certain TCI state set (joint TCI states / separate (DL/UL) TCI states) may be indicated for the UE. Based on the second DCI format, another TCI state set may be indicated for the UE.

In each embodiment of the present disclosure, a PDSCH for single DCI-based multi-TRP (defined in Rel. 16) may be interpreted as a PDSCH to which TDM/FDM/SDM for multi-TRP is applied, and vice versa.

In each embodiment of the present disclosure, a PDSCH for multi-TRP (defined in Rel. 16) may be interpreted as a PDSCH to which TDM/FDM/SDM for single DCI-based multi-TRP is applied, and vice versa.

In each embodiment of the present disclosure, a PUSCH/PUCCH/PDCCH for single DCI-based multi-TRP may be interpreted as a PUSCH/PUCCH/PDCCH repetition transmission (repetition) for multi-TRP (defined in Rel. 17 (or later versions)), and vice versa.

In each embodiment of the present disclosure, an SFN PDSCH/PDCCH may be interpreted as an SFN PDSCH/PDCCH defined in Rel. 17 (or later versions), and vice versa.

In each embodiment of the present disclosure, use of multi-DCI-based multi-TRP being configured may mean CORESET pool index = 1 being configured. Also, use of multi-DCI-based multi-TRP being configured may mean a CORESET pool index with two different values (for example, 0 and 1) being configured.

In each embodiment of the present disclosure, UL transmission using multi-TRP may mean a UL transmission scheme using a plurality of UE panels according to DCI enhancement.

In each embodiment of the present disclosure, if a joint TCI state / separate TCI state in a unified TCI state framework is not applicable to each channel/signal, the above-described default TCI state / QCL / spatial relation may be used for determining a TCI state / QCL / spatial relation of each channel.

Each embodiment of the present disclosure below may be applied to transmission and reception of an arbitrary channel/signal being a target of application of the above-described unified TCI state framework defined in Rel. 17 (or later versions).

In the present disclosure, a TCI state being applied to each channel/signal/resource may mean a TCI state being applied to transmission and reception of each channel/signal/resource.

### <First Embodiment>

### {Analysis 1}

In Rel. 17 (or later versions), there is a case where configuration/indication/application of a joint/separate TCI state has not been sufficiently studied. For example, a study has not been sufficiently performed with respect to configuration/indication/application of a joint DL/UL TCI state with M = 2, N = 1, a joint DL/UL TCI state with M = 1, N = 2, a separate DL/UL TCI state with M = 2, N = 1, a separate DL/UL TCI state with M = 1, N = 2, a joint TCI state with M = N = 1, and a joint TCI state with M = N = 2.

Unless this study is sufficiently performed, appropriate TCI state configuration/indication may fail, and degradation in communication quality, reduction in throughput, and the like may occur.

A method for resolving the challenge in Analysis 1 will be described below.

Note that the present disclosure will be described by assuming that a maximum number of indicated/configured TCI states is 2, but the maximum number of TCI states may be a number greater than 2.

### <<Embodiment 1-1>>

In the present embodiment, a joint TCI state with M = 2, N = 1 may be indicated for a UE.

Two common TCI states may be indicated for the UE. Two joint TCI states may be indicated for the UE.

For the UE, one or more joint DL/UL TCI states may be indicated, and one or two TCI states corresponding to a codepoint with one or two TCI states may be activated by using a MAC CE.

The UE may apply the two indicated TCI states to reception of a DL channel/signal.

The UE may determine one TCI state among the two indicated TCI states, based on a specific condition, and may apply the one TCI state to UL channel/signal transmission.

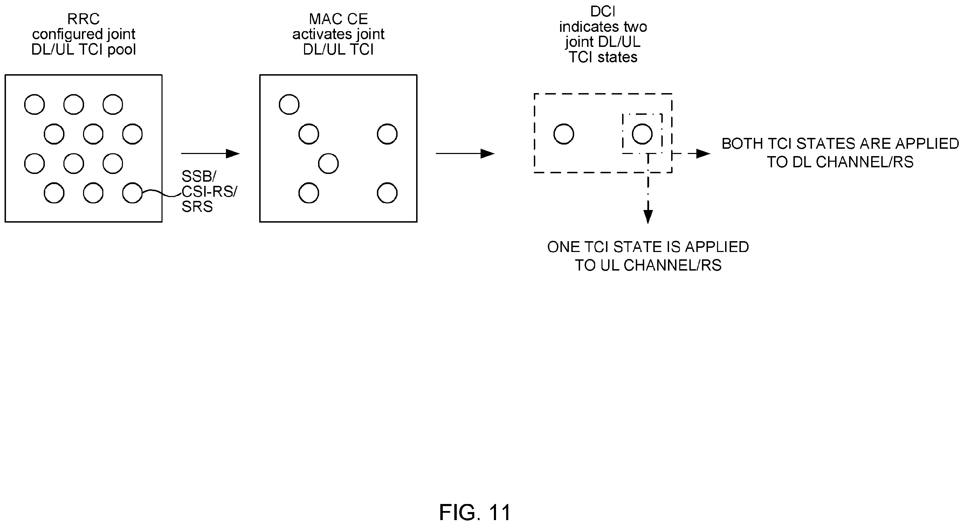

FIG. 11 is a diagram to show an example of the TCI state determination according to Embodiment 1-1. In the example shown in FIG. 11, a joint TCI state pool is configured by RRC signaling, and some joint TCI states of the joint TCI state pool are activated by a MAC CE. Subsequently, two TCI states from among TCI states activated by DCI are indicated.

In the example shown in FIG. 11, the UE applies both of the two TCI states to reception of a DL channel/signal, and applies either one (specific) TCI state of the two TCI states to transmission of a UL channel/signal.

For example, the UE may determine one TCI state with the specific TCI state among the two indicated TCI states. The specific TCI state may be, for example, a first (or second) TCI state corresponding to a TCI codepoint. The first (or second) TCI state corresponding to the TCI codepoint may be notified to the UE by using higher layer signaling (for example, RRC signaling / MAC CE). The specific TCI state may be a TCI state corresponding to a specific TCI state ID (for example, a lower (or higher) TCI state ID).

The UE may determine one TCI state among the two indicated TCI states, based on higher layer signaling (higher layer parameter). For example, the first (or second) TCI state of the first and second TCI states corresponding to the TCI codepoint may be indicated by using the higher layer signaling. Similarly, by using the higher layer signaling, a TCI state corresponding to a specific TCI state ID (for example, a lower (or higher) TCI state ID) may be indicated.

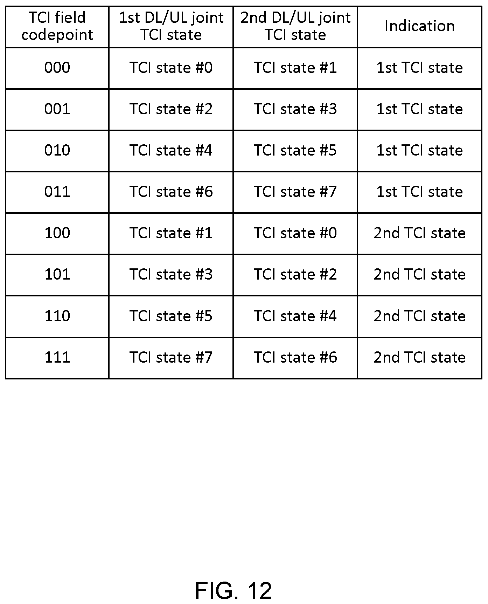

The UE may determine one TCI state among the two indicated TCI states, based on DCI. The DCI may include a field for indicating a UL TCI state to be used. For example, as shown in FIG. 12, the DCI may include an indication bit (field) for indicating a first TCI state and a second TCI state corresponding to a codepoint of a TCI field.

The DL channel/signal may be transmitted by using at least one of a transmission scheme for single/multi-DCI-based multi-TRP and an SFN transmission scheme.

One joint DL/UL TCI state may correspond to one TRP.

Application of a DL channel/signal (for example, a PDCCH/PDSCH/CSI-RS) for the multi-TRP may be predefined in a specification, or may be configured/indicated for the UE by using higher layer signaling (RRC signaling / MAC CE) / physical layer signaling (DCI).

The UL channel/signal may be transmitted by using a transmission scheme using a single TRP / single panel.

Application of a UL channel/signal (for example, a PUCCH/PUSCH/SRS) using the single TRP / single panel may be predefined in a specification, or may be configured/indicated for the UE by using higher layer signaling (RRC signaling / MAC CE) / physical layer signaling (DCI).

In the present embodiment, when two common TCI states are indicated for the UE, the UE may apply the two TCI states to UL transmission.

### <<Embodiment 1-2>>

In the present embodiment, a joint TCI state with M = 1, N = 2 may be indicated for the UE.

Two common TCI states may be indicated for the UE. Two joint TCI states may be indicated for the UE.

For the UE, one or more joint DL/UL TCI states may be indicated, and one or two TCI states corresponding to a codepoint with one or two TCI states may be activated by using a MAC CE.

The UE may apply the two indicated TCI states to transmission of a UL channel/signal.

The UE may determine one TCI state among the two indicated TCI states, based on a specific condition, and may apply the one TCI state to reception of a DL channel/signal.

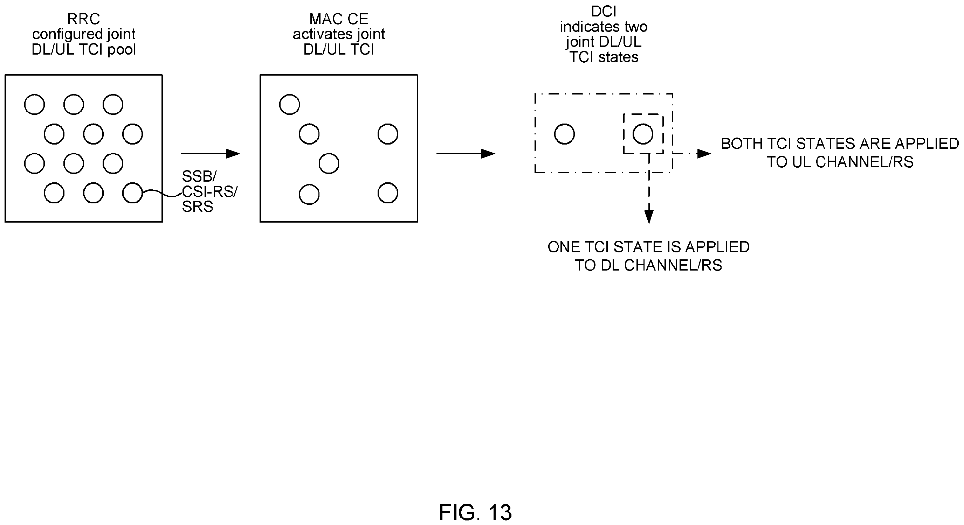

FIG. 13 is a diagram to show an example of the TCI state determination according to Embodiment 1-2. In the example shown in FIG. 13, a joint TCI state pool is configured by RRC signaling, and some joint TCI states of the joint TCI state pool are activated by a MAC CE. Subsequently, two TCI states from among TCI states activated by DCI are indicated.

In the example shown in FIG. 13, the UE applies both of the two TCI states to reception of a UL channel/signal, and applies either one (specific) TCI state of the two TCI states to transmission of a DL channel/signal.

For example, the UE may determine one TCI state with the specific TCI state among the two indicated TCI states. The specific TCI state may be, for example, a first (or second) TCI state corresponding to a TCI codepoint. The first (or second) TCI state corresponding to the TCI codepoint may be notified to the UE by using higher layer signaling (for example, RRC signaling / MAC CE). The specific TCI state may be a TCI state corresponding to a specific TCI state ID (for example, a lower (or higher) TCI state ID).

The UE may determine one TCI state among the two indicated TCI states, based on higher layer signaling (higher layer parameter). For example, the first (or second) TCI state of the first and second TCI states corresponding to the TCI codepoint may be indicated by using the higher layer signaling. Similarly, by using the higher layer signaling, a TCI state corresponding to a specific TCI state ID (for example, a lower (or higher) TCI state ID) may be indicated.

The UE may determine one TCI state among the two indicated TCI states, based on DCI. The DCI may include a field for indicating a UL TCI state to be used.

The UL channel/signal may be transmitted by using at least one of a transmission scheme for single/multi-DCI-based multi-TRP and an SFN transmission scheme.

One joint DL/UL TCI state may correspond to one TRP.

Application of a UL channel/signal (for example, a PUCCH/PUSCH/SRS) for the multi-TRP may be predefined in a specification, or may be configured/indicated for the UE by using higher layer signaling (RRC signaling / MAC CE) / physical layer signaling (DCI).

The DL channel/signal may be transmitted by using a transmission scheme using a single TRP / single panel.

Application of a DL channel/signal (for example, a PDCCH/PDSCH/CSI-RS) using the single TRP / single panel may be predefined in a specification, or may be configured/indicated for the UE by using higher layer signaling (RRC signaling / MAC CE) / physical layer signaling (DCI).

In the present embodiment, when two common TCI states are configured for the UE, the UE may apply the two TCI states to DL reception.

### <<Embodiment 1-3>>

In the present embodiment, a separate TCI state with M = 2, N = 1 may be indicated for the UE.

For the UE, two (separate) DL TCI states and one (separate) UL TCI state may be indicated.

When receiving a MAC CE indicating a TCI codepoint corresponding to the two DL TCI states, the UE may activate/apply the DL TCI states. In this case, when the MAC CE does not include a TCI codepoint corresponding to the UL TCI state, the UE may maintain/hold a currently applied (current) UL TCI state.

When receiving a MAC CE indicating a TCI codepoint corresponding to the one UL TCI state, the UE may activate/apply the UL TCI state. In this case, when the MAC CE does not include a TCI codepoint corresponding to the DL TCI state, the UE may maintain/hold a currently applied (current) DL TCI state.

When receiving a MAC CE indicating a TCI codepoint corresponding to the two DL TCI states and a TCI codepoint corresponding to the one UL TCI state, the UE may activate/apply the DL TCI states and the UL TCI state.

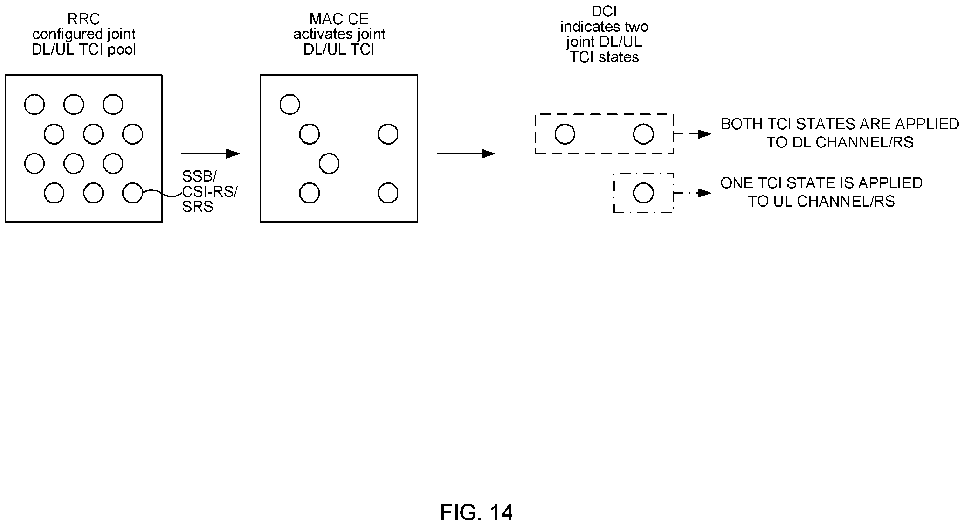

FIG. 14 is a diagram to show an example of the TCI state determination according to Embodiment 1-3. In the example shown in FIG. 14, a joint TCI state pool is configured by RRC signaling, and some joint TCI states of the joint TCI state pool are activated by a MAC CE. Subsequently, two DL TCI states and one UL TCI state from among TCI states activated by DCI are indicated.

In the example shown in FIG. 14, the UE applies both of the two TCI states to reception of a DL channel/signal, and applies the one TCI state to transmission of a UL channel/signal.

For example, the UE may determine one TCI state with the specific TCI state among the two indicated TCI states. The specific TCI state may be, for example, a first (or second) TCI state corresponding to a TCI codepoint. The first (or second) TCI state corresponding to the TCI codepoint may be notified to the UE by using higher layer signaling (for example, RRC signaling / MAC CE). The specific TCI state may be a TCI state corresponding to a specific TCI state ID (for example, a lower (or higher) TCI state ID).

The UE may determine one TCI state among the two indicated TCI states, based on higher layer signaling (higher layer parameter). For example, the first (or second) TCI state of the first and second TCI states corresponding to the TCI codepoint may be indicated by using the higher layer signaling. Similarly, by using the higher layer signaling, a TCI state corresponding to a specific TCI state ID (for example, a lower (or higher) TCI state ID) may be indicated.

The UE may determine one TCI state among the two indicated TCI states, based on DCI. The DCI may include a field for indicating a UL TCI state to be used.

The DL channel/signal may be transmitted by using at least one of a transmission scheme for single/multi-DCI-based multi-TRP and an SFN transmission scheme.

One DL TCI state may correspond to one TRP.

Application of a DL channel/signal (for example, a PDCCH/PDSCH/CSI-RS) for the multi-TRP may be predefined in a specification, or may be configured/indicated for the UE by using higher layer signaling (RRC signaling / MAC CE) / physical layer signaling (DCI).

The UL channel/signal may be transmitted by using a transmission scheme using a single TRP / single panel.

Application of a UL channel/signal (for example, a PUCCH/PUSCH/SRS) using the single TRP / single panel may be predefined in a specification, or may be configured/indicated for the UE by using higher layer signaling (RRC signaling / MAC CE) / physical layer signaling (DCI).

In the present embodiment, when two DL TCI states are indicated for the UE, the UE may activate/apply, for/to UL transmission, the two DL TCI states as UL TCI states.

### <<Embodiment 1-4>>

In the present embodiment, a separate TCI state with M = 1, N = 2 may be indicated for the UE.

For the UE, one (separate) DL TCI state and two (separate) UL TCI states may be indicated.

When receiving a MAC CE indicating a TCI codepoint corresponding to the one DL TCI state, the UE may activate/apply the DL TCI state. In this case, when the MAC CE does not include a TCI codepoint corresponding to the UL TCI state, the UE may maintain/hold a currently applied (current) UL TCI state.

When receiving a MAC CE indicating a TCI codepoint corresponding to the two UL TCI states, the UE may activate/apply the UL TCI states. In this case, when the MAC CE does not include a TCI codepoint corresponding to the DL TCI state, the UE may maintain/hold a currently applied (current) DL TCI state.

When receiving a MAC CE indicating a TCI codepoint corresponding to the one DL TCI state and a TCI codepoint corresponding to the two UL TCI states, the UE may activate/apply the DL TCI state and the UL TCI states.

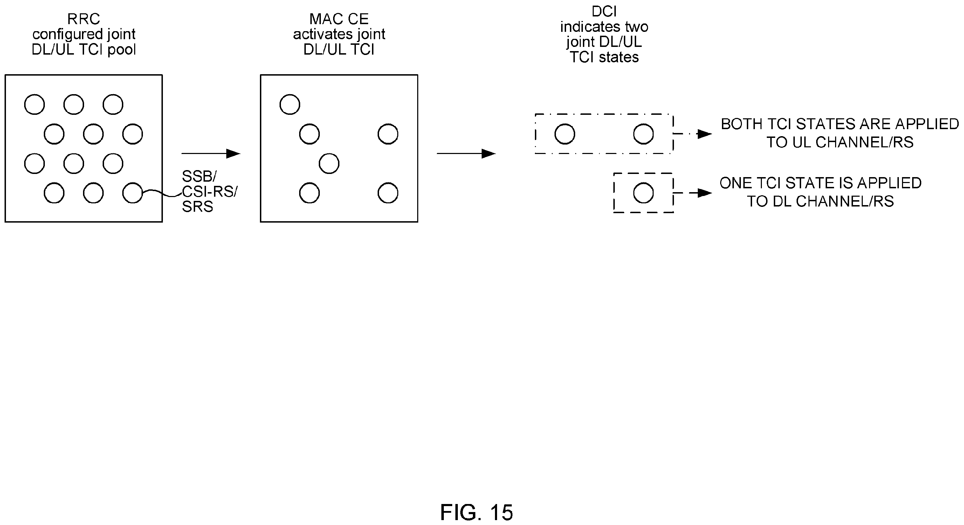

FIG. 15 is a diagram to show an example of the TCI state determination according to Embodiment 1-4. In the example shown in FIG. 15, a joint TCI state pool is configured by RRC signaling, and some joint TCI states of the joint TCI state pool are activated by a MAC CE. Subsequently, two UL TCI states and one UL TCI state from among TCI states activated by DCI are indicated.

In the example shown in FIG. 15, the UE applies both of the two TCI states to reception of a UL channel/signal, and applies the one TCI state to transmission of a DL channel/signal.

For example, the UE may determine one TCI state with the specific TCI state among the two indicated TCI states. The specific TCI state may be, for example, a first (or second) TCI state corresponding to a TCI codepoint. For example, the first (or second) TCI state of the first and second TCI states corresponding to the TCI codepoint may be indicated by using the higher layer signaling. Similarly, by using the higher layer signaling, a TCI state corresponding to a specific TCI state ID (for example, a lower (or higher) TCI state ID) may be indicated. The specific TCI state may be a TCI state corresponding to a specific TCI state ID (for example, a lower (or higher) TCI state ID).

The UE may determine one TCI state among the two indicated TCI states, based on higher layer signaling (higher layer parameter). For example, the first (or second) TCI state of the first and second TCI states corresponding to the TCI codepoint may be indicated by using the higher layer signaling. Similarly, by using the higher layer signaling, a TCI state corresponding to a specific TCI state ID (for example, a lower (or higher) TCI state ID) may be indicated.

The UE may determine one TCI state among the two indicated TCI states, based on DCI. The DCI may include a field for indicating a UL TCI state to be used.

The UL channel/signal may be transmitted by using at least one of a transmission scheme for single/multi-DCI-based multi-TRP and an SFN transmission scheme.

One UL TCI state may correspond to one TRP.

Application of a UL channel/signal (for example, a PUCCH/PUSCH/SRS) for the multi-TRP may be predefined in a specification, or may be configured/indicated for the UE by using higher layer signaling (RRC signaling / MAC CE) / physical layer signaling (DCI).

The UL channel/signal may be transmitted by using a transmission scheme using a single TRP / single panel.

Application of a DL channel/signal (for example, a PDCCH/PDSCH/CSI-RS) using the single TRP / single panel may be predefined in a specification, or may be configured/indicated for the UE by using higher layer signaling (RRC signaling / MAC CE) / physical layer signaling (DCI).

In the present embodiment, when two UL TCI states are indicated for the UE, the UE may activate/apply, for/to DL reception, the two UL TCI states as DL TCI states.

According to the first embodiment above, it is possible to appropriately perform configuration/indication/application of a joint/separate TCI state depending on the number of DL/UL TCI states.

### <Second Embodiment>

### {Analysis 2}

For Rel. 17 (or later versions), it is studied that a joint DL/UL TCI state mode and a separate DL/UL TCI state mode are configured in RRC signaling.

In Rel. 17 (or later versions), there is a case where switching of a joint/separate TCI state has not been sufficiently studied. For example, switching of a joint/separate TCI state for each M and N has not been sufficiently studied.

Unless this study is sufficiently performed, appropriate TCI state configuration/indication may fail, and degradation in communication quality, reduction in throughput, and the like may occur.

A method for resolving the challenge in Analysis 2 will be described below.

### <<Embodiment 2-1>>

A joint TCI state mode may be configured for a UE. The joint TCI state mode may be a case that the UE determines a DL/UL TCI, based on a joint TCI state.

The UE may perform switching between a case of M = N = 1 and a case other than the case (for example, at least one of a case of M = 1, N = 2, a case of M = 2, N = 1, and a case of M = N = 2) (Embodiment 2-1-1).

The UE may perform the switching, based on higher layer signaling (RRC signaling / RRC configuration).

For example, the RRC configuration may indicate at least one of one or two TCI states being activated by a TCI codepoint (in a MAC CE) and one or two TCI states being indicated by DCI.

For example, when the RRC configuration configures activation/indication of one TCI state, the UE may determine that a joint TCI state with M = N = 1 is activated/indicated.

For example, when the RRC configuration configures activation/indication of two TCI states, the UE may determine that a joint TCI state in at least one of a case of M = 1, N = 2, a case of M = 2, N = 1, and a case of M = N = 2 is activated/indicated.

The UE may perform the switching, based on a MAC CE / DCI. The RRC configuration may indicate at least one of one or two TCI states being activated by a TCI codepoint (in a MAC CE) and one or two TCI states being indicated by DCI.

The UE may perform the switching, based on at least one of the number of TCI states activated by a TCI codepoint (in the MAC CE) (which may be referred to as a first number) and the number of TCI states indicated by the DCI (which may be referred to as a second number).

For example, when the first number / second number is 1, the UE may determine that a joint TCI state with M = N = 1 is activated/indicated. For example, when the first number / second number is 2, the UE may determine that a joint TCI state in at least one of a case of M = 1, N = 2, a case of M = 2, N = 1, and a case of M = N = 2 is activated/indicated.

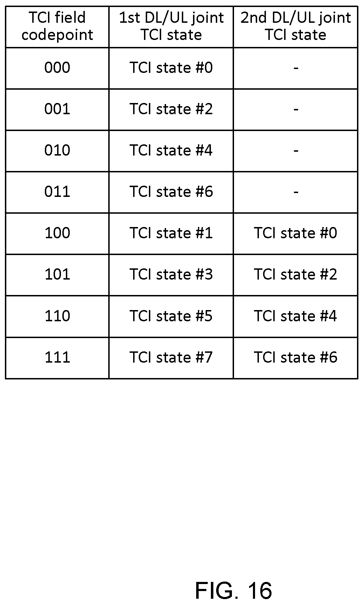

FIG. 16 is a diagram to show an example of a method for the TCI state-related switching according to Embodiment 2-1. In FIG. 16, for the UE, one joint TCI state is indicated by codepoints "000" to "011" of a TCI field, and two joint TCI states are indicated by codepoints "100" to "111" of the TCI field. The UE determines that a case where one TCI state is indicated is a case of M = 1, N = 1, and determines that a case where two TCI states are indicated is a case other than the case (for example, at least one of a case of M = 1, N = 2, a case of M = 2, N = 1, and a case of M = N = 2) .

The UE may perform switching between at least two of a case of M = 1, N = 2, a case of M = 2, N = 1, and a case of M = N = 2 (Embodiment 2-1-2).

The UE may perform the switching, based on higher layer signaling (RRC signaling / RRC configuration / MAC CE) / DCI.

For example, in at least one of a case where two TCI states are activated by a TCI codepoint (in the MAC CE) and a case where two TCI states are indicated by the DCI, the UE may determine that the RRC signaling / MAC CE / DCI indicates application of two DL TCI states.

For example, in at least one of a case where two TCI states are activated by a TCI codepoint (in the MAC CE) and a case where two TCI states are indicated by the DCI, the UE may determine that the RRC signaling / MAC CE / DCI indicates application of two UL TCI states.

For example, in at least one of a case where two TCI states are activated by a TCI codepoint (in the MAC CE) and a case where two TCI states are indicated by the DCI, the UE may determine that the RRC signaling / MAC CE / DCI indicates application of two DL and UL TCI states.

### <<Embodiment 2-2>>

A separate TCI state mode may be configured for the UE. The separate TCI state mode may be a case that the UE determines a DL/UL TCI, based on a (separate) DL TCI state and a (separate) UL TCI state.

The UE may perform switching between at least two of a case of M = 1, N = 1, a case of M = 1, N = 2, a case of M = 2, N = 1, and a case of M = 2, N = 2.

The UE may perform the switching, based on higher layer signaling (RRC signaling / RRC configuration).

For example, the RRC configuration may indicate at least one of one or two DL/UL TCI states being activated by a TCI codepoint (in a MAC CE) and one or two DL/UL TCI states being indicated by DCI.

For example, when the RRC configuration configures activation/indication of one DL TCI state and activation/indication of one UL TCI state, the UE may determine that a separate TCI state with M = 1, N = 1 is activated/indicated.

For example, when the RRC configuration configures activation/indication of one DL TCI state and activation/indication of two UL TCI states, the UE may determine that a separate TCI state with M = 1, N = 2 is activated/indicated.

For example, when the RRC configuration configures activation/indication of two DL TCI states and activation/indication of one UL TCI state, the UE may determine that a separate TCI state with M = 2, N = 1 is activated/indicated.

For example, when the RRC configuration configures activation/indication of two DL TCI states and activation/indication of two UL TCI states, the UE may determine that a separate TCI state with M = 2, N = 2 is activated/indicated.

The UE may perform the switching, based on a MAC CE / DCI. One or two separate DL TCI states may be activated by a TCI codepoint (in the MAC CE). One or two separate UL TCI states may be activated by a TCI codepoint (in the MAC CE).

The MAC CE may include a codepoint corresponding to a DL TCI state and a codepoint corresponding to a UL TCI state. The MAC CE may include only a codepoint corresponding to a DL TCI state. The MAC CE may include only a codepoint corresponding to a UL TCI state.

The UE may perform the switching, based on at least one of the number of DL/UL TCI states activated by a TCI codepoint (in the MAC CE) (which may be referred to as a first number) and the number of DL/UL TCI states indicated by the DCI (which may be referred to as a second number).

For example, when the first number / second number for the DL TCI states and the first number / second number for the UL TCI states are each 1, the UE may determine that a separate TCI state with M = 1, N = 1 is activated/indicated.

For example, when the first number / second number for the DL TCI states is 1, and the first number / second number for the UL TCI states is 2, the UE may determine that a separate TCI state with M = 1, N = 2 is activated/indicated.

For example, when the first number / second number for the DL TCI states is 2, and the first number / second number for the UL TCI states is 1, the UE may determine that a separate TCI state with M = 2, N = 1 is activated/indicated.

For example, when the first number / second number for the DL TCI states is 2, and the first number / second number for the UL TCI states is 2, the UE may determine that a separate TCI state with M = 2, N = 2 is activated/indicated.

According to the second embodiment above, it is possible to appropriately perform switching of a TCI state mode depending on the numbers of M and N.

### {Analysis 3}

In a joint/separate TCI state framework in Rel. 17 (or later versions), for the UE, at least one of two joint DL/UL TCI states, two DL TCI states, and two UL TCI states is indicated.

For this case, how to apply one or two TCI states to a DL/UL channel has not been sufficiently studied.

For example, a study has not been sufficiently performed with respect to how to apply one or two TCI states to a PDSCH/PUSCH/PDCCH/PUCCH.

For example, a study has not been sufficiently performed with respect to how to apply two TCI states to a PDSCH/PUSCH/PDCCH/PUCCH for multi-TRP when two TCI states are applied.

For example, a study has not been sufficiently performed with respect to how to apply two TCI states to a PDSCH/PUSCH/PDCCH/PUCCH for single TRP when one TCI state is applied.

Unless these studies are sufficiently performed, appropriate application of a TCI state to each channel may fail, and degradation in communication quality, reduction in throughput, and the like may occur.

A method for resolving the challenge in Analysis 3 will be described in a third embodiment to a seventh embodiment below.

### <Third Embodiment>

Two joint TCI states / separate DL TCI states may be indicated for a UE.

The UE may determine which of one TCI state or two TCI states of the two indicated TCI states is applied to reception of a DL channel (for example, a PDSCH). The UE may determine which one or more TCI states of the two indicated TCI states are applied to reception of the DL channel (for example, the PDSCH).

For the TCI state determination, the UE may follow at least one of Embodiment 3-1 to Embodiment 3-7 below.

Note that the above-mentioned method described in the first embodiment may be used for a method for determining a TCI state to be applied to the DL channel (for example, the PDSCH), among the indicated TCI states.

### <<Embodiment 3-1>>

The joint TCI states / separate DL TCI states may not be applicable to at least one of a PDSCH, a PDSCH for multi-TRP, and an SFN PDSCH.

The UE may assume that the joint TCI states / separate DL TCI states are not applied to at least one of the PDSCH, the PDSCH for multi-TRP, and the SFN PDSCH.

### <<Embodiment 3-2>>

As a default, two TCI states may be applied to reception of the PDSCH.

The UE may apply two TCI states to reception of the PDSCH.

The UE may assume that two TCI states are indicated for reception of the PDSCH.

### <<Embodiment 3-3>>

As a default, one TCI state may be applied to reception of the PDSCH.

The UE may apply one TCI state to reception of the PDSCH.

The UE may assume that one TCI state is indicated for reception of the PDSCH.

### <<Embodiment 3-4>>

Which of one TCI state or two TCI states of the two indicated TCI states is applied may be indicated/configured for the UE by higher layer signaling (RRC signaling / MAC CE).

When the higher layer signaling configures/indicates two TCI states for a PDSCH, the UE may apply two TCI states to at least one of a plurality of (for example, all) UE-specific PDSCHs and a plurality of (for example, all) non-UE-specific (UE common) PDSCHs.

The configuration/indication by the higher layer signaling may configure/indicate at least one of a scheme for a PDSCH to which SDM/FDM/TDM for single DCI-based multi-TRP is applied, and a scheme for an SFN PDSCH.

The configuration/indication by the higher layer signaling may be configured/indicated for each CC / for each BWP. The configuration/indication by the higher layer signaling may be configured/indicated for each set of available CCs/BWPs.

The configuration/indication by the higher layer signaling may be configured/indicated in common for a plurality of channels/signals (for example, PDSCHs/PDCCHs/PUSCHs/PUCCHs/CSI-RSs/SRSs).

### <<Embodiment 3-5>>

Which of one TCI state or two TCI states of the two indicated TCI states is applied may be indicated in specific DCI.

The specific DCI may be DCI for scheduling the PDSCH (scheduling DCI) .

The specific DCI may be DCI for activating a semi-persistent scheduling (SPS) PDSCH.

A specific field in the specific DCI may indicate which of one TCI state or two TCI states of the two indicated TCI states is applied. In this case, for the same DCI field as a switching field for a single TRP / multi-TRP, a field similar to (or the same field as) a field (switching field) for dynamically switching a single TRP / multi-TRP in PUSCH repetition transmission (repetition) for multi-TRP (defined in Rel. 17 (or later versions)) may be used.

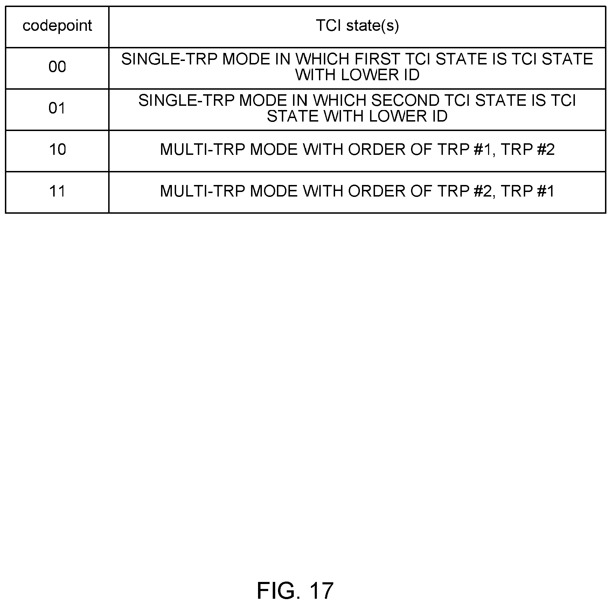

FIG. 17 is a diagram to show an example of the switching field according to Embodiment 3-5. Such a field for indicating a single-TRP mode or a multi-TRP mode and a TCI state to be applied as that shown in FIG. 17 may be included in DCI (for example, DCI format 1_1/1_2).

In the example shown in FIG. 17, the UE determines a single-TRP mode or a multi-TRP mode and a TCI state to be applied, based on an indicated codepoint. The "order of TRP #1, TRP #2" described in FIG. 17 may mean that first repetition of PDSCH repetition transmission corresponds to a first TCI state / TCI state with a lower TCI state ID and that second repetition of the PDSCH repetition transmission corresponds to a second TCI state / TCI state with a higher TCI state ID. Also, the "order of TRP #2, TRP #1" may mean that first repetition of PDSCH repetition transmission corresponds to a second TCI state / TCI state with a higher TCI state ID and that second repetition of the PDSCH repetition transmission corresponds to a first TCI state / TCI state with a lower TCI state ID.

Note that the number of bits and field contents of the field described in FIG. 17 are just examples, and are not limited to this example. For example, the field may include only one codepoint for indicating the single/multi-TRP mode. The field may not include field contents indicating a TRP order.

### <<Embodiment 3-6>>

For the UE, application of one or two TCI states to the PDSCH may be configured/indicated by using the number of PDSCH repetitions.

The UE may determine, based on the number of PDSCH repetitions, application of one or two TCI states to the PDSCH.

For example, when the PDSCH with the number of repetitions being 1 is configured, the UE may determine application of one TCI state to the PDSCH.

For example, when the PDSCH with the number of repetitions greater than 1 is configured, the UE may determine application of two TCI states to the PDSCH.

### <<Embodiment 3-7>>

The UE may determine application of Embodiments 3-1 to 3-6 above, based on a PDSCH transmission scheme.

For each PDSCH transmission scheme, which of Embodiments 3-1 to 3-6 above is applied may be predefined in a specification. For each PDSCH transmission scheme, which of Embodiments 3-1 to 3-6 above is applied may be configured for the UE by using higher layer signaling.

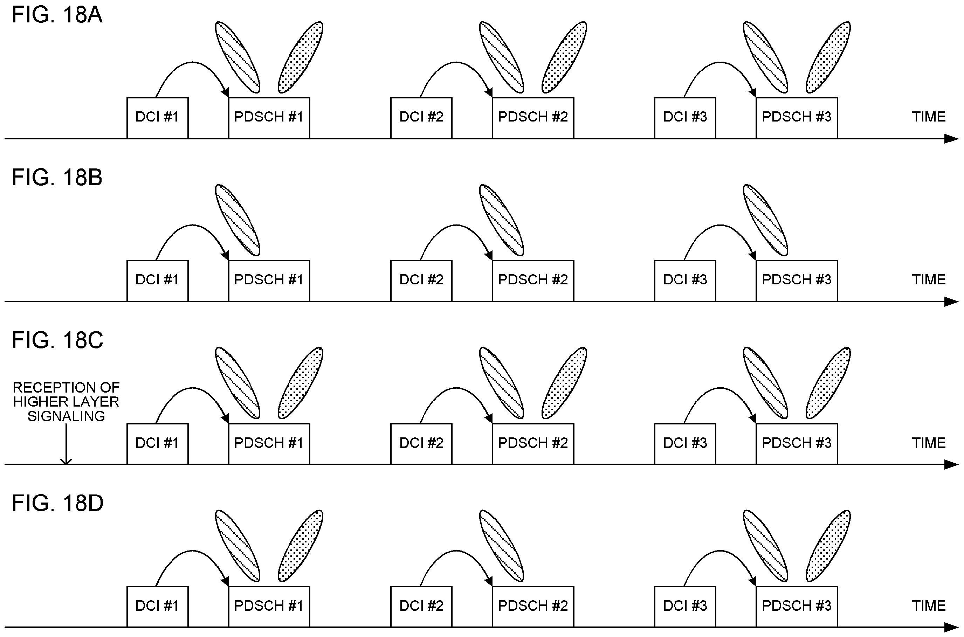

FIGS. 18A to 18D are diagrams to show examples of the TCI state application in the third embodiment. FIGS. 18A, 18B, 18C, and 18D correspond to Embodiments 3-2, 3-3, 3-4, and 3-5 above, respectively.

In an example shown in FIG. 18A, the UE applies two TCI states to PDSCH reception. In an example shown in FIG. 18B, the UE applies one TCI state to PDSCH reception.

In an example shown in FIG. 18C, the UE receives higher layer signaling (RRC signaling / MAC CE) that configures/activates application of one or two TCI states. In the example shown in FIG. 18C, the higher layer signaling configures application of two TCI states. Thus, the UE applies two TCI states to PDSCH reception.

In an example shown in FIG. 18D, the number of TCI states to be applied to a PDSCH is determined based on DCI for scheduling the PDSCH. In the example shown in FIG. 18D, DCI #1 and DCI #3 each indicates application of two TCI states, and DCI #2 indicates application of one TCI state.

### «Mapping of PDSCH »

In at least one of Embodiments 3-1 to 3-7 mentioned above, if two TCI states are applied, the two TCI states may also be applied to at least one of a PDSCH to which SDM/FDM/TDM for single DCI-based multi-TRP is applied, and an SFN PDSCH.

The UE may apply a first TCI state and a second TCI state indicated in a common TCI state, as a first TCI state and a second TCI state in at least one of the PDSCH to which SDM/FDM/TDM for single DCI-based multi-TRP is applied, and the SFN PDSCH, respectively.

The UE may apply a TCI state with a lower TCI state ID and a TCI state with a higher TCI state ID indicated in the common TCI state, as a first TCI state and a second TCI state in at least one of the PDSCH to which SDM/FDM/TDM for single DCI-based multi-TRP is applied, and the SFN PDSCH, respectively.

The UE may apply a TCI state with a lower TCI state ID and a TCI state with a higher TCI state ID indicated in the common TCI state, as a TCI state with a lower TCI state ID and a TCI state with a higher TCI state ID in at least one of the PDSCH to which SDM/FDM/TDM for single DCI-based multi-TRP is applied, and the SFN PDSCH, respectively.

Note that in the present disclosure, "first" and "second" may be interchangeably interpreted. In the present disclosure, "lower" and "higher" may be interchangeably interpreted.

In at least one of Embodiments 3-1 to 3-7 mentioned above, one TCI state may be applied.

In this case, the UE may determine the one TCI state, based on a specific rule.

For example, when two TCI states are indicated for the UE, the UE may determine that one TCI state to be applied to a PDSCH is at least one of a first TCI state, a second TCI state, a TCI state with a lower TCI state ID, and a TCI state with a higher TCI state ID.

In this case, the UE may determine the one TCI state, based on higher layer signaling (RRC signaling / MAC CE).

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

In this case, the UE may determine the one TCI state, based on specific DCI.

The specific DCI may be DCI for scheduling the PDSCH (scheduling DCI) .

The specific DCI may be DCI for activating a semi-persistent scheduling (SPS) PDSCH.

In this case, the same DCI field as a switching field for a single TRP / multi-TRP may be used as a field for PUSCH repetition transmission (repetition) for multi-TRP (defined in Rel. 17 (or later versions)).

Note that in the third embodiment, different determination methods of the determination methods in Embodiments 3-1 to 3-7 may be applied to respective ones of a case where a joint DL/UL TCI state is configured and a case where a separate DL TCI state is configured.

According to the third embodiment above, it is possible to appropriately control application of a unified TCI state to a PDSCH.

### <Fourth Embodiment>

Two joint TCI states / separate UL TCI states may be indicated for a UE.

The UE may determine which of one TCI state or two TCI states of the two indicated TCI states is applied to transmission of a UL channel (for example, a PUSCH). The UE may determine which one or more TCI states of the two indicated TCI states are applied to transmission of the UL channel (for example, the PUSCH).

For the TCI state determination, the UE may follow at least one of Embodiment 4-1 to Embodiment 4-7 below.

Note that the above-mentioned method described in the first embodiment may be used for a method for determining a TCI state to be applied to the UL channel (for example, the PUSCH), among the indicated TCI states.

### <<Embodiment 4-1>>

The joint TCI states / separate UL TCI states may not be applicable to at least one of a PUSCH, a PUSCH for multi-TRP, and a PUSCH for multi-panel.

The UE may assume that the joint TCI states / separate UL TCI states are not applied to at least one of the PUSCH, the PUSCH for multi-TRP, and the PUSCH for multi-panel.

### <<Embodiment 4-2>>

As a default, two TCI states may be applied to transmission of the PUSCH.

The UE may apply two TCI states to transmission of the PUSCH.

The UE may assume that two TCI states are indicated for transmission of the PUSCH.

### <<Embodiment 4-3>>

As a default, one TCI state may be applied to transmission of the PUSCH.

The UE may apply one TCI state to transmission of the PUSCH.

The UE may assume that one TCI state is indicated for transmission of the PUSCH.

### <<Embodiment 4-4>>

Which of one TCI state or two TCI states of the two indicated TCI states is applied may be indicated/configured for the UE by higher layer signaling (RRC signaling / MAC CE).

When the higher layer signaling configures/indicates two TCI states for a PUSCH, the UE may apply two TCI states to at least one of a plurality of (for example, all) PUSCHs (by a dynamic grant (scheduled by DCI)) and a plurality of (for example, all) configured grant PUSCHs.

The configuration/indication by the higher layer signaling may configure/indicate/enable at least one of a PUSCH for multi-TRP and a PUSCH for multi-panel.

The configuration/indication by the higher layer signaling may be configured/indicated for each CC / for each BWP. The configuration/indication by the higher layer signaling may be configured/indicated for each set of available CCs/BWPs.

The configuration/indication by the higher layer signaling may be configured/indicated in common for a plurality of channels/signals (for example, PDSCHs/PDCCHs/PUSCHs/PUCCHs/CSI-RSs/SRSs).

The configuration/indication by the higher layer signaling may be configured/indicated in each configuration of a plurality of configured grant configurations.

The configuration/indication by the higher layer signaling may be configured/indicated in all the configurations of a plurality of configured grant configurations.

### <<Embodiment 4-5>>

Which of one TCI state or two TCI states of the two indicated TCI states is applied may be indicated in specific DCI.

The specific DCI may be DCI for scheduling the PUSCH (scheduling DCI) .

The specific DCI may be DCI for activating a configured grant PUSCH.

The specific DCI may be DCI for scheduling retransmission of a configured grant PUSCH.

A specific field in the specific DCI may indicate which of one TCI state or two TCI states of the two indicated TCI states is applied. In this case, for the same DCI field as a switching field for a single TRP / multi-TRP, a field similar to (or the same field as) a field (switching field) for dynamically switching a single TRP / multi-TRP in PUSCH repetition transmission (repetition) for multi-TRP (defined in Rel. 17 (or later versions)) may be used.

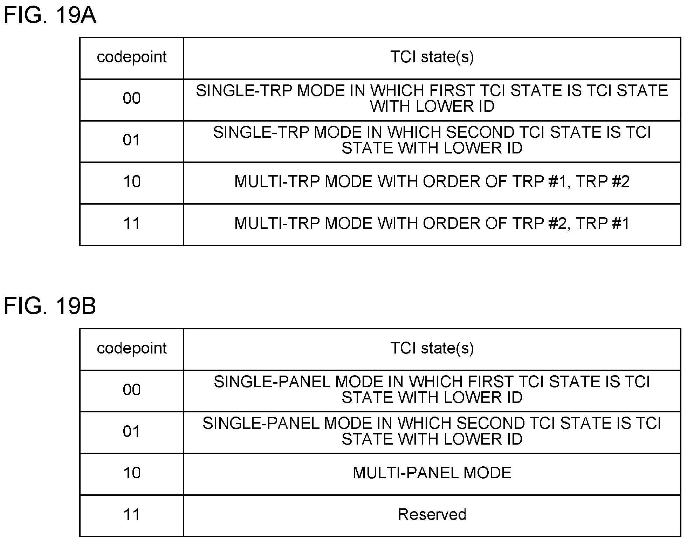

FIG. 19A is a diagram to show an example of the switching field according to Embodiment 4-5. Such a field for indicating a single-TRP mode or a multi-TRP mode and a TCI state to be applied as that shown in FIG. 19A may be included in DCI (for example, DCI format 0_1/1_2).

In the example shown in FIG. 19A, the UE determines a single-TRP mode or a multi-TRP mode and a TCI state to be applied, based on an indicated codepoint. The "order of TRP #1, TRP #2" described in FIG. 19A may mean that first repetition of PDSCH repetition transmission corresponds to a first TCI state / TCI state with a lower TCI state ID and that second repetition of the PDSCH repetition transmission corresponds to a second TCI state / TCI state with a higher TCI state ID. Also, the "order of TRP #2, TRP #1" may mean that first repetition of PDSCH repetition transmission corresponds to a second TCI state / TCI state with a higher TCI state ID and that second repetition of the PDSCH repetition transmission corresponds to a first TCI state / TCI state with a lower TCI state ID.

Note that the number of bits and field contents of the field described in FIG. 19A are just examples, and are not limited to this example. For example, the field may include only one codepoint for indicating the single/multi-TRP mode. The field may not include field contents indicating a TRP order.

FIG. 19B is a diagram to show another example of the switching field according to Embodiment 4-5. Such a field for indicating a single-panel mode or a multi-panel mode and a TCI state to be applied as that shown in FIG. 19B may be included in DCI (for example, DCI format 0_1/1_2).

In the example shown in FIG. 19B, the UE determines at least one of a single-panel mode or a multi-panel mode and a TCI state to be applied, based on an indicated codepoint.

Note that the number of bits and field contents of the field described in FIG. 19B are just examples, and are not limited to this example.

### <<Embodiment 4-6>>

For the UE, application of one or two TCI states to a PUSCH may be configured/indicated by using the number of PUSCH repetitions.

The UE may determine, based on the number of PUSCH repetitions, application of one or two TCI states to the PUSCH.

For example, when the PUSCH with the number of repetitions being 1 is configured, the UE may determine application of one TCI state to the PUSCH.

For example, when the PUSCH with the number of repetitions greater than 1 is configured, the UE may determine application of two TCI states to the PUSCH.

### <<Embodiment 4-7>>

The UE may determine application of Embodiments 4-1 to 4-6 above, based on a PUSCH transmission scheme.

For each PUSCH transmission scheme, which of Embodiments 4-1 to 4-6 above is applied may be predefined in a specification. For each PUSCH transmission scheme, which of Embodiments 4-1 to 4-6 above is applied may be configured for the UE by using higher layer signaling.

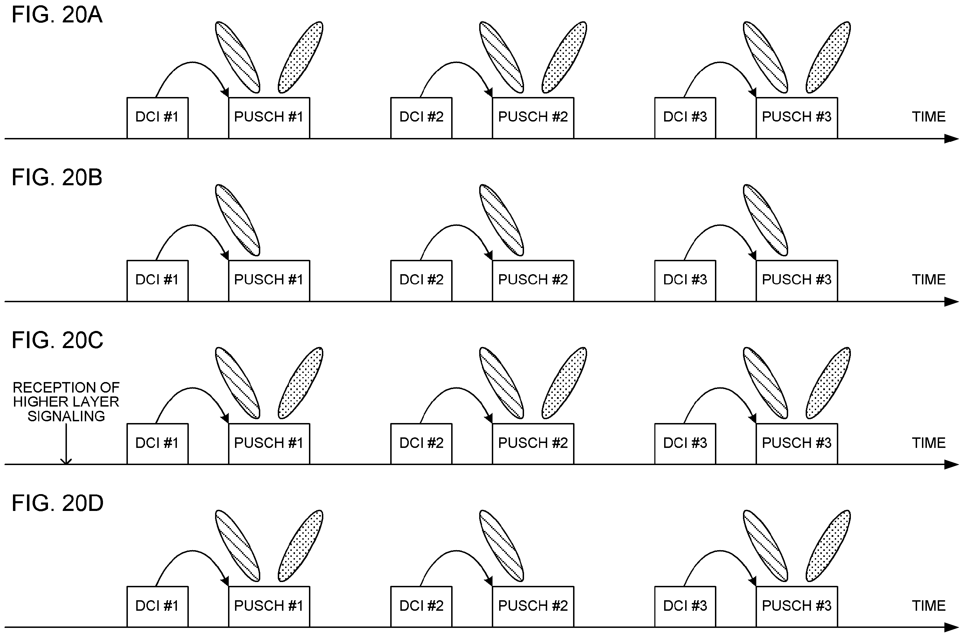

FIGS. 20A to 20D are diagrams to show examples of the TCI state application in the fourth embodiment. FIGS. 20A, 20B, 20C, and 20D correspond to Embodiments 4-2, 4-3, 4-4, and 4-5 above, respectively.

In an example shown in FIG. 20A, the UE applies two TCI states to PUSCH transmission. In an example shown in FIG. 20B, the UE applies one TCI state to PUSCH transmission.

In an example shown in FIG. 20C, the UE receives higher layer signaling (RRC signaling / MAC CE) that configures/activates application of one or two TCI states. In the example shown in FIG. 20C, the higher layer signaling configures application of two TCI states. Thus, the UE applies two TCI states to PUSCH transmission.

In an example shown in FIG. 20D, the number of TCI states to be applied to a PUSCH is determined based on DCI for scheduling the PUSCH. In the example shown in FIG. 20D, DCI #1 and DCI #3 each indicates application of two TCI states, and DCI #2 indicates application of one TCI state.

### «Mapping of PUSCH»

In at least one of Embodiments 4-1 to 4-7 mentioned above, if two TCI states are applied, the two TCI states may also be applied to at least one of a PUSCH for single DCI-based multi-TRP.

The UE may determine that a first TCI state and a second TCI state indicated in a common TCI state correspond to an SRI of a first SRS resource set for a PUSCH for multi-TRP and an SRI of a second SRS resource set for the PUSCH for multi-TRP, respectively.

The UE may determine that a TCI state with a lower TCI state ID and a TCI state with a higher TCI state ID indicated in the common TCI state correspond to an SRI of a first SRS resource set for a PUSCH for multi-TRP and an SRI of a second SRS resource set for the PUSCH for multi-TRP, respectively.

Note that the first SRS resource set may mean an SRS resource set with a lower (or higher) ID. The second SRS resource set may mean an SRS resource set with a higher (or lower) ID.

In at least one of Embodiments 4-1 to 4-7 mentioned above, if two TCI states are applied, the two TCI states may also be applied to UL transmission (PUSCH) using multi-panel.

The UE may determine that a first TCI state and a second TCI state indicated in a common TCI state correspond to a first SRI / SRI field / SRS resource set / panel in multi-panel transmission and a second SRI / SRI field / SRS resource set / panel in multi-panel transmission, respectively.

The UE may determine that a TCI state with a lower TCI state ID and a TCI state with a higher TCI state ID indicated in the common TCI state correspond to a first SRI / SRI field / SRS resource set / panel in multi-panel transmission and a second SRI / SRI field / SRS resource set / panel in multi-panel transmission, respectively.

Note that the first SRS resource set / panel may mean an SRS resource set / panel with a lower (or higher) ID. The second SRS resource set / panel may mean an SRS resource set / panel with a higher (or lower) ID.

In at least one of Embodiments 4-1 to 4-7 mentioned above, one TCI state may be applied.

In this case, the UE may determine the one TCI state, based on a specific rule.

For example, when two TCI states are indicated for the UE, the UE may determine that one TCI state to be applied to a PUSCH is at least one of a first TCI state, a second TCI state, a TCI state with a lower TCI state ID, and a TCI state with a higher TCI state ID.

In this case, the UE may determine the one TCI state, based on higher layer signaling (RRC signaling / MAC CE).

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

In this case, the UE may determine the one TCI state, based on specific DCI.

The specific DCI may be DCI for scheduling the PUSCH (scheduling DCI) .

The specific DCI may be DCI for activating a configured grant PUSCH.

The specific DCI may be DCI for scheduling retransmission of a configured grant PUSCH.

In this case, the same DCI field as a switching field for a single TRP / multi-TRP may be used as a field for PUSCH repetition transmission (repetition) for multi-TRP (defined in Rel. 17 (or later versions)).

Note that in the fourth embodiment, different determination methods of the determination methods in Embodiments 4-1 to 4-7 may be applied to respective ones of a case where a joint DL/UL TCI state is configured and a case where a separate UL TCI state is configured.

According to the fourth embodiment above, it is possible to appropriately control application of a unified TCI state to a PUSCH.

### <Fifth Embodiment>

Two joint TCI states / separate DL TCI states may be indicated for a UE.

The UE may determine which of one TCI state or two TCI states of the two indicated TCI states is applied to reception of a DL channel (for example, a PDCCH). The UE may determine which one or more TCI states of the two indicated TCI states are applied to reception of the DL channel (for example, the PDCCH).

For the TCI state determination, the UE may follow at least one of Embodiment 5-1 to Embodiment 5-7 below.

Note that the above-mentioned method described in the first embodiment may be used for a method for determining a TCI state to be applied to the DL channel (for example, the PDCCH), among the indicated TCI states.

### <<Embodiment 5-1>>

The joint TCI states / separate DL TCI states may not be applicable to at least one of a PDCCH and an SFN PDCCH.

The UE may assume that the joint TCI states / separate DL TCI states are not applied to at least one of the PDCCH and the SFN PDCCH.

### <<Embodiment 5-2>>

As a default, two TCI states may be applied to reception of the PDCCH.

The UE may apply two TCI states to reception of the PDCCH.

The UE may assume that two TCI states are indicated for reception of the PDCCH.

### <<Embodiment 5-3>>

As a default, one TCI state may be applied to reception of the PDCCH.

The UE may apply one TCI state to reception of the PDCCH.

The UE may assume that one TCI state is indicated for reception of the PDCCH.

### <<Embodiment 5-4>>

Which of one TCI state or two TCI states of the two indicated TCI states is applied may be indicated/configured for the UE by higher layer signaling (RRC signaling / MAC CE).

When the higher layer signaling configures/indicates two TCI states for the PDCCH, the UE may apply two TCI states to a plurality of (for example, all) PDCCHs / search space (SS) sets / CORESETs.

When the higher layer signaling configures/indicates two TCI states for the PDCCH, the UE may apply two TCI states to at least one of a plurality of (for example, all) UE-specific PDCCHs and a plurality of (for example, all) non-UE-specific (UE common) PDCCHs.

The configuration/indication by the higher layer signaling may configure/indicate/enable an SFN PDCCH scheme.

The configuration/indication by the higher layer signaling may be configured/indicated for each CC / for each BWP. The configuration/indication by the higher layer signaling may be configured/indicated for each set of available CCs/BWPs.

The configuration/indication by the higher layer signaling may be configured/indicated in common for a plurality of channels/signals (for example, PDSCHs/PDCCHs/PUSCHs/PUCCHs/CSI-RSs/SRSs).

### <<Embodiment 5-5>>

Which of one TCI state or two TCI states of the two indicated TCI states is applied may be indicated/configured for the UE by higher layer signaling (RRC signaling / MAC CE) for each CORESET / SS set.

The configuration/indication by the higher layer signaling may configure/indicate/enable an SFN PDCCH scheme for each CORESET / SS set.

The configuration/indication by the higher layer signaling may be configured/indicated for each CC / for each BWP. The configuration/indication by the higher layer signaling may be configured/indicated for each set of available CCs/BWPs.

### <<Embodiment 5-6>>

For the UE, application of one or two TCI states to the PDCCH may be configured/indicated by using the number of PDCCH repetitions.

The UE may determine, based on the number of PDCCH repetitions, application of one or two TCI states to the PDCCH.

For example, when the PDCCH with the number of repetitions being 1 is configured, the UE may determine application of one TCI state to the PDCCH.

For example, when the PDCCH with the number of repetitions greater than 1 is configured, the UE may determine application of two TCI states to the PDCCH.

### <<Embodiment 5-7>>

The UE may determine application of Embodiments 5-1 to 5-6 above, based on a PDCCH transmission scheme.

For each PDCCH transmission scheme, which of Embodiments 5-1 to 5-6 above is applied may be predefined in a specification. For each PDCCH transmission scheme, which of Embodiments 5-1 to 5-6 above is applied may be configured for the UE by using higher layer signaling.

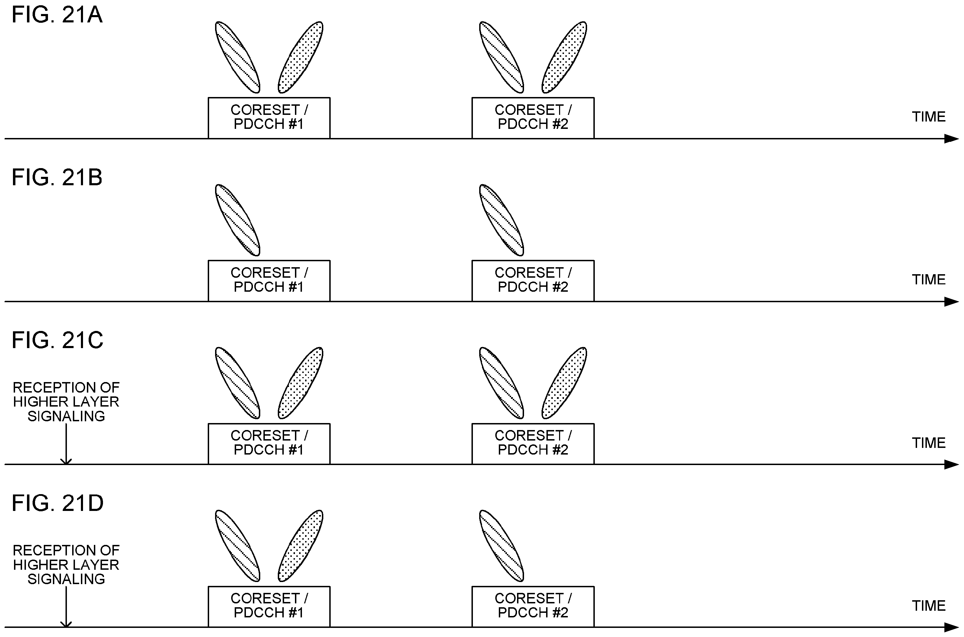

FIGS. 21A to 21D are diagrams to show examples of the TCI state application in the fifth embodiment. FIGS. 21A, 21B, 21C, and 21D correspond to Embodiments 5-2, 5-3, 5-4, and 5-5 above, respectively.

In an example shown in FIG. 21A, the UE applies two TCI states to a CORESET/PDCCH. In an example shown in FIG. 21B, the UE applies one TCI state to a CORESET/PDCCH.

In an example shown in FIG. 21C, the UE receives higher layer signaling (RRC signaling / MAC CE) that configures/activates application of one or two TCI states. In the example shown in FIG. 21C, the higher layer signaling configures application of two TCI states. Thus, the UE applies two TCI states to a CORESET/PDCCH.

In an example shown in FIG. 21D, the number of TCI states to be applied to a CORESET/PDCCH is determined, based on higher layer signaling for each CORESET. In the example shown in FIG. 21D, higher layer signaling indicating application of two TCI states to CORESET/PDCCH #1 and indicating application of one TCI state to CORESET/PDCCH #2 is received.

### <<Mapping of PDCCH>>

In at least one of Embodiments 5-1 to 5-7 mentioned above, if two TCI states are applied, the two TCI states may also be applied to an SFN PDCCH.

The UE may apply a first TCI state and a second TCI state indicated in a common TCI state, as a first TCI state and a second TCI state in the SFN PDCCH, respectively.

The UE may apply a first TCI state and a second TCI state indicated in the common TCI state, as a TCI state with a lower TCI state ID and a TCI state with a higher TCI state ID in the SFN PDCCH, respectively.

The UE may apply a TCI state with a lower TCI state ID and a TCI state with a higher TCI state ID indicated in the common TCI state, as a first TCI state and a second TCI state in the SFN PDCCH, respectively.

The UE may apply a TCI state with a lower TCI state ID and a TCI state with a higher TCI state ID indicated in the common TCI state, as a TCI state with a lower TCI state ID and a TCI state with a higher TCI state ID in the SFN PDCCH, respectively.

Note that in the present disclosure, "first" and "second" may be interchangeably interpreted. In the present disclosure, "lower" and "higher" may be interchangeably interpreted.

In at least one of Embodiments 5-1 to 5-7 mentioned above, one TCI state may be applied.

In this case, the UE may determine the one TCI state, based on a specific rule.

For example, when two TCI states are indicated for the UE, the UE may determine that one TCI state to be applied to a PDCCH is at least one of a first TCI state, a second TCI state, a TCI state with a lower TCI state ID, and a TCI state with a higher TCI state ID.

In this case, the UE may determine the one TCI state, based on higher layer signaling (RRC signaling / MAC CE).

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

In this case, the UE may determine the one TCI state, based on higher layer signaling (RRC signaling / MAC CE) for each CORESET / SS set.

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

Note that in the fifth embodiment, different determination methods of the determination methods in Embodiments 5-1 to 5-7 may be applied to respective ones of a case where a joint DL/UL TCI state is configured and a case where a separate DL TCI state is configured.

According to the fifth embodiment above, it is possible to appropriately control application of a unified TCI state to a PDCCH.

### <Sixth Embodiment>

Two joint TCI states / separate DL TCI states may be indicated for a UE.

The UE may determine which of one TCI state or two TCI states of the two indicated TCI states is applied to reception (monitoring) of a DL channel (for example, a PDCCH) / CORESET / SS set. The UE may determine which one or more TCI states of the two indicated TCI states are applied to reception (monitoring) of the DL channel (for example, the PDCCH) / CORESET / SS set.

In the present embodiment, for PDCCH repetition transmission, another PDCCH / CORESET / SS set may be associated with (linked to) a certain PDCCH / CORESET / SS set. In the present embodiment, for PDCCH repetition transmission, another PDCCH / CORESET / SS set being linked to a certain PDCCH / CORESET / SS set may be configured.

In the present disclosure, PDCCHs / CORESETs / SS sets associated with each other may be referred to as PDCCHs / CORESETs / SS sets linked to each other.

For the TCI state determination, when, for PDCCH repetition transmission, another PDCCH / CORESET / SS set is associated with a certain PDCCH / CORESET / SS set, the UE may follow at least one of Embodiment 6-1 to Embodiment 6-7 below.

Note that the above-mentioned method described in the first embodiment may be used for a method for determining a TCI state to be applied to the DL channel (for example, the PDCCH), among the indicated TCI states.

### <<Embodiment 6-1>>

The joint TCI states / separate DL TCI states may not be applicable to at least one of a PDCCH and PDCCH repetition transmission.

The UE may assume that the joint TCI states / separate DL TCI states are not applied to at least one of the PDCCH and the PDCCH repetition transmission.

### <<Embodiment 6-2>>

When, for the PDCCH repetition transmission, two PDCCHs / CORESETs / SS sets linked to each other are configured, the two respective TCI states may be applied to two PDCCHs / CORESETs / SS sets linked to each other, as a default.

When, for the PDCCH repetition transmission, two PDCCHs / CORESETs / SS sets linked to each other are configured, the UE may apply the two TCI states to two respective PDCCHs / CORESETs / SS sets linked to each other.

In this case, one TCI state may correspond to one PDCCH / CORESET / SS set.

### <<Embodiment 6-3>>

When, for the PDCCH repetition transmission, two PDCCHs / CORESETs / SS sets linked to each other are configured, one (same) TCI state may be applied to two PDCCHs / CORESETs / SS sets linked to each other, as a default.

When, for the PDCCH repetition transmission, two PDCCHs / CORESETs / SS sets linked to each other are configured, the UE may apply one (same) TCI state to two PDCCHs / CORESETs / SS sets linked to each other.

### <<Embodiment 6-4>>

Which of one TCI state or two TCI states of the two indicated TCI states is applied may be indicated/configured for the UE by higher layer signaling (RRC signaling / MAC CE).

Which of Embodiment 6-2 or Embodiment 6-3 above is applied may be configured/indicated for the UE by using the higher layer signaling (RRC signaling / MAC CE).

The higher layer signaling may be configuration/indication common to a plurality of (for example, all) PDCCHs / search space (SS) sets / CORESETs.

The configuration/indication by the higher layer signaling may be configured/indicated for each CC / for each BWP. The configuration/indication by the higher layer signaling may be configured/indicated for each set of available CCs/BWPs.

### <<Embodiment 6-5>>

Which of one TCI state or two TCI states of the two indicated TCI states is applied may be indicated/configured for the UE by higher layer signaling (RRC signaling / MAC CE).

Which of Embodiment 6-2 or Embodiment 6-3 above is applied may be configured/indicated for the UE by using the higher layer signaling (RRC signaling / MAC CE).

The higher layer signaling may be configuration/indication common to each of at least one of CORESETs, a search space (SS) set, a pair of CORESETs linked to each other, and a pair of SS sets linked to each other.

The configuration/indication by the higher layer signaling may be configured/indicated for each CC / for each BWP. The configuration/indication by the higher layer signaling may be configured/indicated for each set of available CCs/BWPs.

### <<Embodiment 6-6>>

Which of one TCI state or two TCI states of the two indicated TCI states is applied may be indicated/configured for the UE by higher layer signaling (RRC signaling / MAC CE) for each CORESET / SS set.

The configuration/indication by the higher layer signaling may be configured/indicated for each CC / for each BWP. The configuration/indication by the higher layer signaling may be configured/indicated for each set of available CCs/BWPs.

### <<Embodiment 6-7>>

For the UE, application of one or two TCI states to the PDCCH may be configured/indicated by using the number of PDCCH repetitions.

The UE may determine, based on the number of PDCCH repetitions, application of one or two TCI states to the PDCCH.

For example, when the PDCCH with the number of repetitions being 1 is configured, the UE may determine application of one TCI state to the PDCCH.

For example, when the PDCCH with the number of repetitions greater than 1 is configured, the UE may determine application of two TCI states to the PDCCH.

For the TCI state determination, when, for PDCCH repetition transmission, another PDCCH / CORESET / SS set is not associated with a certain PDCCH / CORESET / SS set (when another PDCCH / CORESET / SS set being linked to a certain PDCCH / CORESET / SS set is not configured for PDCCH repetition transmission), the UE may follow at least one of Embodiment 6-8 to Embodiment 6-9 below.

Note that "when another PDCCH / CORESET / SS set is not associated with the certain PDCCH / CORESET / SS set" may be interpreted as "when two PDCCHs / CORESETs / SS sets linked to each other are absent," "when PDCCH repetition transmission is not configured," a "case of no linkage," or the like, and vice versa.

### <<Embodiment 6-8>>

The joint TCI states / separate DL TCI states may not be applicable to at least one of a PDCCH and PDCCH repetition transmission.

The UE may assume that the joint TCI states / separate DL TCI states are not applied to at least one of the PDCCH and the PDCCH repetition transmission.

### <<Embodiment 6-9>>

As a default, one TCI state may be applied to the PDCCH / CORESET / SS set.

The UE may apply one TCI state to the PDCCH / CORESET / SS set.

The UE may assume that one TCI state is indicated for the PDCCH / CORESET / SS set.

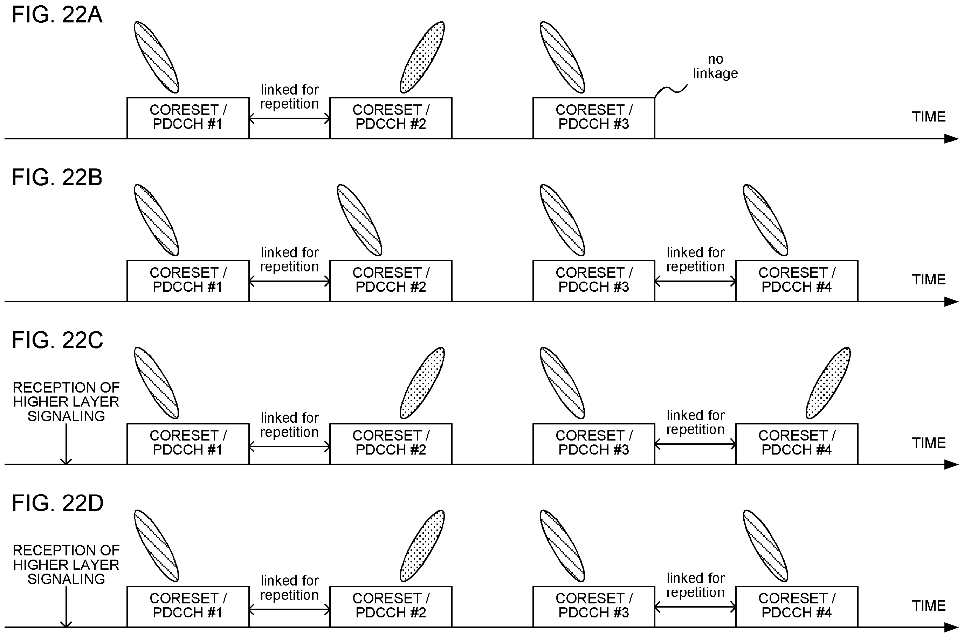

FIGS. 22A to 22D are diagrams to show examples of the TCI state application in the sixth embodiment. FIGS. 22A, 22B, 22C, and 22D correspond to Embodiments 6-2/6-9, 6-3, 6-4, and 6-5/6-6 above, respectively.

In an example shown in FIG. 22A, for CORESETs/PDCCHs, each TCI state of the two TCI states corresponds to one CORESET/PDCCH. In the example shown in FIG. 22A, one TCI state corresponds to a CORESET without linkage.

In an example shown in FIG. 22B, the UE applies one (same) TCI state to a plurality of CORESETs/PDCCHs.

In an example shown in FIG. 22C, which of Embodiment 6-2 or Embodiment 6-3 above is applied may be configured/indicated for the UE by using higher layer signaling (RRC signaling / MAC CE). In the example shown in FIG. 21C, the higher layer signaling configures application of Embodiment 6-2. Thus, respective TCI states of the two TCI states correspond to one CORESET/PDCCH.

In an example shown in FIG. 22D, for Embodiment 6-5, which of Embodiment 6-2 or Embodiment 6-3 above is applied may be configured/indicated for each CORESET by using higher layer signaling. In the example shown in FIG. 22D, the higher layer signaling configures application of Embodiment 6-2 to CORESET/PDCCH #1 and CORESET/PDCCH #2, and configures application of Embodiment 6-3 to CORESET/PDCCH #3 and CORESET/PDCCH #4.

In the example shown in FIG. 22D, for Embodiment 6-6, which TCI state is applied is configured/indicated for each CORESET by using higher layer signaling. In the example shown in FIG. 22D, the higher layer signaling configures application of a first TCI state to CORESET/PDCCH #1, CORESET/PDCCH #3, and CORESET/PDCCH #4, and configures application of a second TCI state to CORESET/PDCCH #2.

### <<Mapping of PDCCH>>

In at least one of Embodiments 6-1 to 6-7 mentioned above, if two TCI states are applied, the two TCI states may also be applied to an SFN PDCCH.

The UE may apply a first TCI state and a second TCI state indicated in a common TCI state to two PDCCHs / CORESETs / SS sets linked to each other, respectively.

The UE may apply a first TCI state and a second TCI state indicated in the common TCI state to a CORESET / SS set corresponding to a lower CORESET ID / SS set ID / CORESET pool ID / TRP ID and a CORESET / SS set corresponding to a higher CORESET ID / SS set ID / CORESET pool ID / TRP ID, respectively.

The UE may apply a TCI state with a lower TCI state ID and a TCI state with a higher TCI state ID indicated in the common TCI state to a CORESET / SS set corresponding to a lower CORESET ID / SS set ID / CORESET pool ID / TRP ID and a CORESET / SS set corresponding to a higher CORESET ID / SS set ID / CORESET pool ID / TRP ID, respectively.

Note that in the present disclosure, "first" and "second" may be interchangeably interpreted. In the present disclosure, "lower" and "higher" may be interchangeably interpreted.

In at least one of Embodiments 6-1 to 6-7 mentioned above, one (same) TCI state may be applied to two PDCCHs / CORESETs / SS sets linked to each other.

In this case, the UE may determine the one TCI state, based on a specific rule.

For example, when two TCI states are indicated for the UE, the UE may determine that one TCI state to be applied to a PDCCH is at least one of a first TCI state, a second TCI state, a TCI state with a lower TCI state ID, and a TCI state with a higher TCI state ID.

In this case, the UE may determine the one TCI state, based on higher layer signaling (RRC signaling / MAC CE).

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

In this case, the UE may determine the one TCI state, based on higher layer signaling (RRC signaling / MAC CE) for each CORESET / SS set.

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

In at least one of Embodiments 6-8 and 6-9 mentioned above, one TCI state may be applied to a PDCCH / CORESET / SS set without linkage.

In this case, the UE may determine the one TCI state, based on a specific rule.

For example, when two TCI states are indicated for the UE, the UE may determine that one TCI state to be applied to a PDCCH is at least one of a first TCI state, a second TCI state, a TCI state with a lower TCI state ID, and a TCI state with a higher TCI state ID.

In this case, the UE may determine the one TCI state, based on higher layer signaling (RRC signaling / MAC CE).

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

In this case, the UE may determine the one TCI state, based on higher layer signaling (RRC signaling / MAC CE) for each CORESET / SS set.

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

Note that in the sixth embodiment, different determination methods of the determination methods in Embodiments 6-1 to 6-9 may be applied to respective ones of a case where a joint DL/UL TCI state is configured and a case where a separate DL TCI state is configured.

According to the sixth embodiment above, it is possible to appropriately control application of a unified TCI state to a PDCCH even when PDCCH repetition transmission is used.

### <Seventh Embodiment>

Two joint TCI states / separate UL TCI states may be indicated for a UE.

The UE may determine which of one TCI state or two TCI states of the two indicated TCI states is applied to transmission of a UL channel (for example, a PUCCH). The UE may determine which one or more TCI states of the two indicated TCI states are applied to transmission of the UL channel (for example, the PUCCH).

For the TCI state determination, the UE may follow at least one of Embodiment 7-1 to Embodiment 7-7 below.

Note that the above-mentioned method described in the first embodiment may be used for a method for determining a TCI state to be applied to the UL channel (for example, the PUCCH), among the indicated TCI states.

### <<Embodiment 7-1>>

The joint TCI states / separate UL TCI states may not be applicable to at least one of a PUCCH and a PUCCH for multi-TRP.

The UE may assume that the joint TCI states / separate UL TCI states are not applied to at least one of the PUCCH and the PUCCH for multi-TRP.

### <<Embodiment 7-2>>

As a default, two TCI states may be applied to transmission of the PUCCH.

The UE may apply two TCI states to transmission of the PUCCH.

The UE may assume that two TCI states are indicated for transmission of the PUCCH.

### <<Embodiment 7-3>>

As a default, one TCI state may be applied to transmission of the PUCCH.

The UE may apply one TCI state to transmission of the PUCCH.

The UE may assume that one TCI state is indicated for transmission of the PUCCH.

### <<Embodiment 7-4>>

Which of one TCI state or two TCI states of the two indicated TCI states is applied may be indicated/configured for the UE by higher layer signaling (RRC signaling / MAC CE).

When the higher layer signaling configures/indicates two TCI states for the PUCCH, the UE may apply two TCI states to a plurality of (for example, all) PUCCH resources.

When the higher layer signaling configures/indicates two TCI states for the PUCCH, the UE may apply two TCI states to at least one of a plurality of (for example, all) UE-specific PUCCHs and a plurality of (for example, all) non-UE-specific (UE common) PUCCHs.

The configuration/indication by the higher layer signaling may configure/indicate/enable a PUCCH for multi-TRP.

The configuration/indication by the higher layer signaling may be configured/indicated for each CC / for each BWP. The configuration/indication by the higher layer signaling may be configured/indicated for each set of available CCs/BWPs.

The configuration/indication by the higher layer signaling may be configured/indicated in common for a plurality of channels/signals (for example, PDSCHs/PDCCHs/PUSCHs/PUCCHs/CSI-RSs/SRSs).

### <<Embodiment 7-5>>

Which of one TCI state or two TCI states of the two indicated TCI states is applied may be indicated/configured for the UE by higher layer signaling (RRC signaling / MAC CE) for each PUCCH resource.

The configuration/indication by the higher layer signaling may configure/indicate/enable, for a certain PUCCH resource, a PUCCH for multi-TRP.

The configuration/indication by the higher layer signaling may be configured/indicated for each CC / for each BWP. The configuration/indication by the higher layer signaling may be configured/indicated for each set of available CCs/BWPs.

In the present disclosure, the PUCCH resource may be interpreted as a PUCCH resource group, and vice versa.

### <<Embodiment 7-6>>

For the UE, application of one or two TCI states to the PUCCH may be configured/indicated by using the number of PUCCH repetitions.

The UE may determine, based on the number of PUCCH repetitions, application of one or two TCI states to the PUCCH.

For example, when the PUCCH with the number of repetitions being 1 is configured, the UE may determine application of one TCI state to the PUCCH.

For example, when the PUCCH with the number of repetitions greater than 1 is configured, the UE may determine application of two TCI states to the PUCCH.

### <<Embodiment 7-7>>

The UE may determine application of Embodiments 7-1 to 7-6 above, based on a PUCCH transmission scheme.

For each PUCCH transmission scheme, which of Embodiments 7-1 to 7-6 above is applied may be predefined in a specification. For each PUCCH transmission scheme, which of Embodiments 7-1 to 7-6 above is applied may be configured for the UE by using higher layer signaling.

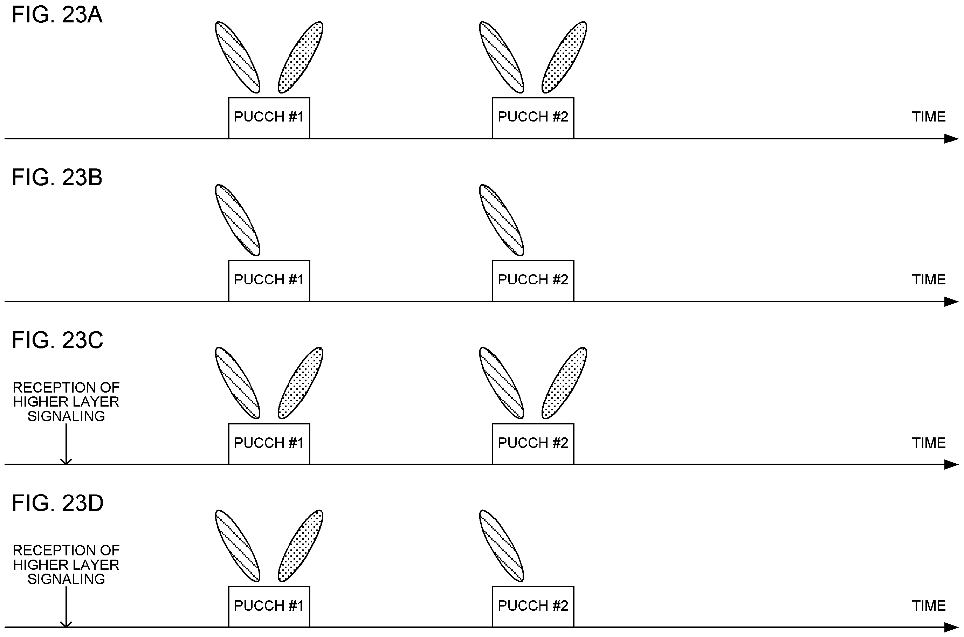

FIGS. 23A to 23D are diagrams to show examples of the TCI state application in the seventh embodiment. FIGS. 23A, 23B, 23C, and 23D correspond to Embodiments 7-2, 7-3, 7-4, and 7-5 above, respectively.

In an example shown in FIG. 23A, the UE applies two TCI states to PUCCH transmission. In an example shown in FIG. 23B, the UE applies one TCI state to PUCCH transmission.

In an example shown in FIG. 23C, the UE receives higher layer signaling (RRC signaling / MAC CE) that configures/activates application of one or two TCI states. In the example shown in FIG. 23C, the higher layer signaling configures application of two TCI states. Thus, the UE applies two TCI states to PUCCH transmission.

In an example shown in FIG. 23D, the number of TCI states to be applied to a PUCCH is determined, based on higher layer signaling for each PUCCH (PUCCH resource). In the example shown in FIG. 23D, higher layer signaling indicating application of two TCI states to PUCCH #1 and indicating application of one TCI state to PUCCH #2 is received.

### <<Mapping of PUCCH>>

In at least one of Embodiments 7-1 to 7-7 mentioned above, if two TCI states are applied, the two TCI states may also be applied to a PUCCH for multi-TRP.

The UE may determine that a first TCI state and a second TCI state indicated in a common TCI state correspond to a first PUCCH spatial relation of a PUCCH for multi-TRP and a second PUCCH spatial relation of the PUCCH for multi-TRP, respectively.

The UE may determine that a first TCI state and a second TCI state indicated in the common TCI state correspond to a PUCCH spatial relation of a PUCCH for multi-TRP with a lower ID and a PUCCH spatial relation of the PUCCH for multi-TRP with a higher ID, respectively.

The UE may determine that a TCI state with a lower TCI state ID and a TCI state with a higher TCI state ID indicated in the common TCI state correspond to a first PUCCH spatial relation of a PUCCH for multi-TRP and a second PUCCH spatial relation of the PUCCH for multi-TRP, respectively.

The UE may determine that a TCI state with a lower TCI state ID and a TCI state with a higher TCI state ID indicated in the common TCI state correspond to a PUCCH spatial relation of a PUCCH for multi-TRP with a lower ID and a PUCCH spatial relation of the PUCCH for multi-TRP with a higher ID, respectively.

In at least one of Embodiments 7-1 to 7-7 mentioned above, one TCI state may be applied.

In this case, the UE may determine the one TCI state, based on a specific rule.

For example, when two TCI states are indicated for the UE, the UE may determine that one TCI state to be applied to a PUCCH is at least one of a first TCI state, a second TCI state, a TCI state with a lower TCI state ID, and a TCI state with a higher TCI state ID.

In this case, the UE may determine the one TCI state, based on higher layer signaling (RRC signaling / MAC CE).

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

In this case, the UE may determine the one TCI state, based on higher layer signaling (RRC signaling / MAC CE) for each PUCCH resource.

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

In the present disclosure, the PUCCH resource may be interpreted as a PUCCH resource group, and vice versa.

Note that in the seventh embodiment, different determination methods of the determination methods in Embodiments 7-1 to 7-7 may be applied to respective ones of a case where a joint DL/UL TCI state is configured and a case where a separate UL TCI state is configured.

According to the seventh embodiment above, it is possible to appropriately control application of a unified TCI state to a PUCCH.

### {Analysis 4}

In a joint/separate TCI state framework in Rel. 17 (or later versions), for the UE, at least one of two joint DL/UL TCI states, two DL TCI states, and two UL TCI states is indicated.

For this case, how to apply one or two TCI states to a DL/UL reference signal (RS) has not been sufficiently studied.

For example, a study has not been sufficiently performed with respect to how to apply one or two TCI states to a CSI-RS/SRS.

For example, a study has not been sufficiently performed with respect to how to apply two TCI states to a CSI-RS/SRS when two TCI states are applied.

For example, a study has not been sufficiently performed with respect to how to apply two TCI states to a CSI-RS/SRS when one TCI state is applied.

Unless these studies are sufficiently performed, appropriate application of a TCI state to each RS may fail, and degradation in communication quality, reduction in throughput, and the like may occur.

A method for resolving the challenge in Analysis 4 will be described in an eighth embodiment and a ninth embodiment below.

### <Eighth Embodiment>

Two joint TCI states / separate UL TCI states may be indicated for a UE.

The UE may determine/judge one or two TCI states to be applied to transmission of a UL reference signal (for example, an SRS).

The UE may determine which of one TCI state or two TCI states of the two indicated TCI states is applied to transmission of the UL reference signal (for example, the SRS). The UE may determine which one or more TCI states of the two indicated TCI states are applied to transmission of the UL reference signal (for example, the SRS).

One SRS resource set may be configured for the UE. For the TCI state determination, the UE may follow at least one of Embodiment 8-1 and Embodiment 8-2 below.

Note that the above-mentioned method described in the first embodiment may be used for a method for determining a TCI state to be applied to the UL reference signal (for example, the SRS), among the indicated TCI states.

### <<Embodiment 8-1>>

The joint TCI states / separate UL TCI states may not be applicable to an SRS.

The UE may assume that the joint TCI states / separate UL TCI states are not applied to the SRS.

### <<Embodiment 8-2>>

The UE may apply one TCI state to an SRS resource included in one SRS resource set.

The UE may assume that one TCI state is indicated for the SRS resource included in one SRS resource set.

A plurality of SRS resource sets may be configured for the UE. The plurality of SRS resource sets may be at least one of SRS resource sets for multi-TRP and SRS resource sets for multi-panel UL transmission.

For the TCI state determination, the UE may follow at least one of Embodiment 8-3 to Embodiment 8-7 below.

### <<Embodiment 8-3>>

The joint TCI states / separate UL TCI states may not be applicable to an SRS.

The UE may assume that the joint TCI states / separate UL TCI states are not applied to the SRS.

### <<Embodiment 8-4>>

When two SRS resource sets are configured as a default, two TCI states may be applied to the two respective SRS resource sets.

When two SRS resource sets are configured, the UE may apply two TCI states to the two respective SRS resource sets.

In this case, one TCI state may correspond to one SRS resource set.

### <<Embodiment 8-5>>

As a default, one TCI state may be applied to a plurality of (for example, all) SRS resource sets.

The UE may apply one TCI state to transmission of the SRS.

The UE may assume that one TCI state is indicated for transmission of the SRS.

### <<Embodiment 8-6>>

Which of one TCI state or two TCI states of the two indicated TCI states is applied may be indicated/configured for the UE by higher layer signaling (RRC signaling / MAC CE).

Whether either of Embodiments 8-4 and 8-5 above is applied may be configured/indicated for the UE by using the higher layer signaling (RRC signaling / MAC CE).

The configuration/indication by the higher layer signaling may be configured/indicated for each CC / for each BWP. The configuration/indication by the higher layer signaling may be configured/indicated for each set of available CCs/BWPs.

### <<Embodiment 8-7>>

Which of one TCI state or two TCI states of the two indicated TCI states is applied may be indicated/configured for the UE by higher layer signaling (RRC signaling / MAC CE) for each SRS resource set / for each SRS resource.

The configuration/indication by the higher layer signaling may be configured/indicated for each CC / for each BWP. The configuration/indication by the higher layer signaling may be configured/indicated for each set of available CCs/BWPs.

One joint TCI state / separate UL TCI state may be indicated for the UE.

A plurality of codebook (CB) / non-codebook (NCB) SRS resource sets for multi-panel may be configured for the UE. The plurality of CB/NCB SRS resource sets may be configured for multi-TRP.

When, for the UE, one joint TCI state / separate UL TCI state is indicated and a plurality of CB/NCB SRS resource sets are configured, for the TCI state determination, the UE may follow at least one of Embodiment 8-8 and Embodiment 8-9 below.

### <<Embodiment 8-8>>

The joint TCI states / separate UL TCI states may not be applicable to an SRS.

The UE may assume that the joint TCI states / separate UL TCI states are not applied to the SRS.

### <<Embodiment 8-9>>

The UE may apply one TCI state to an SRS resource included in a plurality of (for example, all) SRS resource sets.

The UE may assume that one TCI state is indicated for the SRS resource included in the plurality of (for example, all) SRS resource sets.

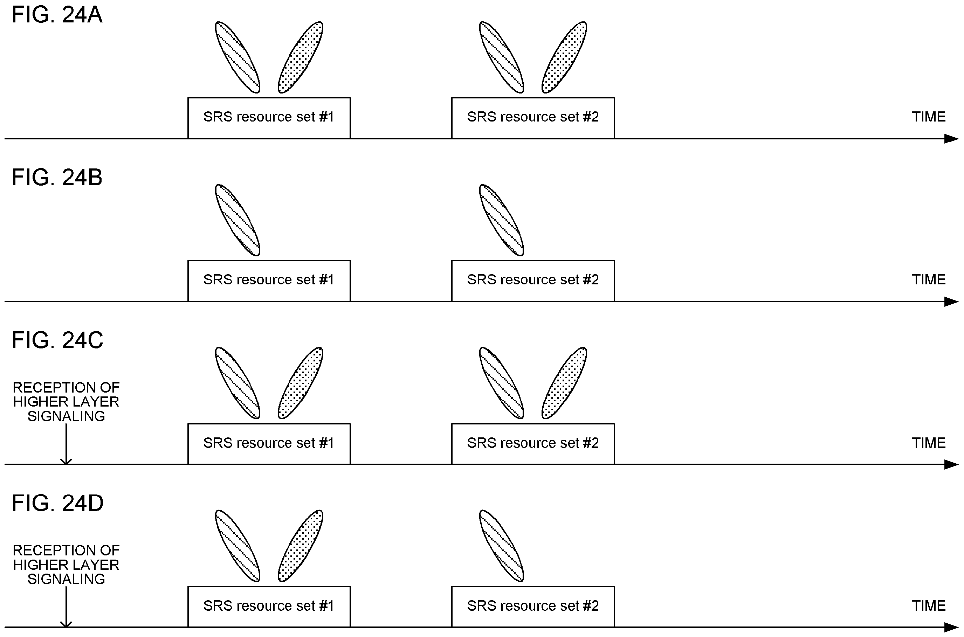

FIGS. 24A to 24D are diagrams to show examples of the TCI state application in the eighth embodiment. FIGS. 24A, 24B, 24C, and 24D correspond to Embodiments 8-4, 8-5, 8-6, and 8-7 above, respectively.

In an example shown in FIG. 24A, for SRS resource sets, respective TCI states of the two TCI states correspond to each of the SRS resource sets.

In an example shown in FIG. 24B, the UE applies one (same) TCI state to a plurality of SRS resource sets.

In an example shown in FIG. 24C, which of Embodiment 8-4 or Embodiment 8-5 above is applied may be configured/indicated for the UE by using higher layer signaling (RRC signaling / MAC CE). In the example shown in FIG. 24C, the higher layer signaling configures application of Embodiment 8-4. Thus, respective TCI states of the two TCI states correspond to one SRS resource set.

In an example shown in FIG. 24D, which TCI state is applied is configured/indicated for each SRS resource set by using higher layer signaling. In the example shown in FIG. 24D, the higher layer signaling configures application of a first TCI state to SRS resource set #1, and configures application of a second TCI state to SRS resource set #2.

### <<Mapping of SRS>>

In at least one of Embodiments 8-3 to 8-7 mentioned above, if two TCI states are applied, the two TCI states may correspond to a specific SRS.

The UE may apply a first TCI state and a second TCI state indicated in a common TCI state to an SRS resource set corresponding to a lower SRS resource set ID / panel ID / TRP ID and an SRS resource set corresponding to a higher SRS resource set ID / panel ID / TRP ID, respectively.

The UE may apply a TCI state with a lower TCI state ID and a TCI state with a higher TCI state ID indicated in the common TCI state to an SRS resource set corresponding to a lower SRS resource set ID / panel ID / TRP ID and an SRS resource set corresponding to a higher SRS resource set ID / panel ID / TRP ID, respectively.

Note that in the present disclosure, "first" and "second" may be interchangeably interpreted. In the present disclosure, "lower" and "higher" may be interchangeably interpreted.

In at least one of Embodiments 8-1 to 8-9 mentioned above, one (same) TCI state may be applied to a plurality of SRS resource sets.

In this case, the UE may determine the one TCI state, based on a specific rule.

For example, when two TCI states are indicated for the UE, the UE may determine that one TCI state to be applied to an SRS is at least one of a first TCI state, a second TCI state, a TCI state with a lower TCI state ID, and a TCI state with a higher TCI state ID.

In this case, the UE may determine the one TCI state, based on higher layer signaling (RRC signaling / MAC CE).

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

In at least one of Embodiments 8-1 to 8-9 mentioned above, one TCI state may be applied to a plurality of SRS resource sets.

In this case, the UE may determine the one TCI state, based on a specific rule.

For example, when two TCI states are indicated for the UE, the UE may determine that one TCI state to be applied to an SRS is at least one of a first TCI state, a second TCI state, a TCI state with a lower TCI state ID, and a TCI state with a higher TCI state ID.

In this case, the UE may determine the one TCI state, based on higher layer signaling (RRC signaling / MAC CE).

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

### <<Variations of Eighth Embodiment>>

For the UE, one SRS resource set / SRS resource with a plurality of joint TCI states / UL TCI states may be configured.

The UE may transmit, in the same time resource (for example, symbol), a plurality of SRSs (SRS resources) by using a plurality of beams. The UE may perform, for transmission of the SRSs, simultaneous transmission by using a plurality of beams.

The UE may transmit, in a certain time resource (for example, symbol), a plurality of SRSs (SRS resources) by using one beam. The UE may change beams in different time resources (for example, symbols / slots / transmission occasions / time domain occasions).

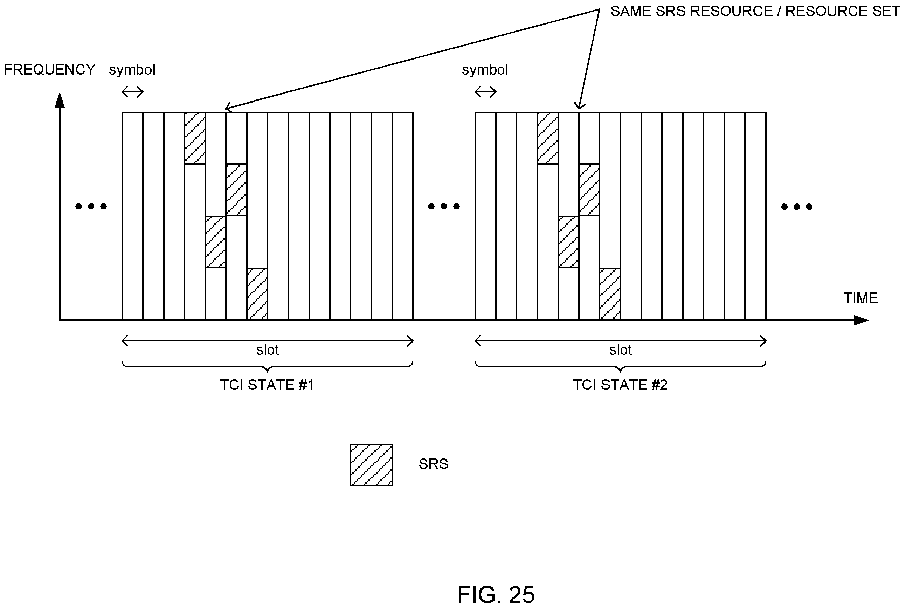

FIG. 25 is a diagram to show an example of the TCI states according to variations of the eighth embodiment. In the example shown in FIG. 25, the UE performs, for SRS resource sets transmitted in different time resources (in FIG. 25, slots), transmission of SRSs by using different beams (TCI states (TCI state #1 and TCI state #2)).

Note that the SRS in the eighth embodiment may be at least one of a periodic SRS, a semi-persistent SRS, and an aperiodic SRS. The SRS in the eighth embodiment may be at least one of an SRS for codebook usage, an SRS for non-codebook usage, an SRS for beam management usage, and an SRS for antenna switching usage.

Note that in the eighth embodiment, different determination methods of the determination methods in Embodiments 8-1 to 8-9 may be applied to respective ones of a case where a joint DL/UL TCI state is configured and a case where a separate UL TCI state is configured.

According to the eighth embodiment above, it is possible to appropriately control application of a unified TCI state to an SRS.

### <Ninth Embodiment>

Two joint TCI states / separate DL TCI states may be indicated for a UE.

The UE may determine which of one TCI state or two TCI states of the two indicated TCI states is applied to reception of a DL reference signal (for example, a CSI-RS). The UE may determine which one or more TCI states of the two indicated TCI states are applied to reception of the DL reference signal (for example, the CSI-RS).

In the present embodiment, a channel measurement resource (CMR, resourcesForChannelMeasurement), a CSI-RS for channel measurement, a CSI-RS resource for channel measurement, a CSI-RS, and a CSI-RS resource may be interchangeably interpreted. In the present disclosure, a set, a subset, and a group may be interchangeably interpreted.

For the UE, one CSI-RS resource set may be configured in one resource setting / report setting. For the TCI state determination, the UE may follow at least one of Embodiment 9-1 and Embodiment 9-2 below.

Note that the above-mentioned method described in the first embodiment may be used for a method for determining a TCI state to be applied to the DL reference signal (for example, the CSI-RS), among the indicated TCI states.

### <<Embodiment 9-1>>

The joint TCI states / separate DL TCI states may not be applicable to a CSI-RS.

The UE may assume that the joint TCI states / separate DL TCI states are not applied to the CSI-RS.

### <<Embodiment 9-2>>

The UE may apply one TCI state to a CSI-RS resource included in one CSI-RS resource set.

The UE may assume that one TCI state is indicated for the CSI-RS resource included in one CSI-RS resource set.

A plurality of CSI-RS resource sets may be configured for the UE. The plurality of CSI-RS resource sets may be at least one of a CSI-RS resource set for beam management for multi-TRP and a CSI-RS resource set for CSI for multi-TRP.

For the TCI state determination, the UE may follow at least one of Embodiment 9-3 to Embodiment 9-7 below.

### <<Embodiment 9-3>>

The joint TCI states / separate DL TCI states may not be applicable to a CSI-RS.

The UE may assume that the joint TCI states / separate DL TCI states are not applied to the CSI-RS.

### <<Embodiment 9-4>>

When two CSI-RS resource sets are configured as a default, two TCI states may be applied to the two respective CSI-RS resource sets.

When two CSI-RS resource sets are configured, the UE may apply two TCI states to the two respective CSI-RS resource sets.

In this case, one TCI state may correspond to one CSI-RS resource set.

### <<Embodiment 9-5>>

As a default, one TCI state may be applied to a plurality of (for example, all) CSI-RS resource sets.

The UE may apply one TCI state to reception of the CSI-RS.

The UE may assume that one TCI state is indicated for reception of the CSI-RS.

### <<Embodiment 9-6>>

Which of one TCI state or two TCI states of the two indicated TCI states is applied may be indicated/configured for the UE by higher layer signaling (RRC signaling / MAC CE).

Which of Embodiment 9-4 or Embodiment 9-5 above is applied may be configured/indicated for the UE by using the higher layer signaling (RRC signaling / MAC CE).

The configuration/indication by the higher layer signaling may be configured/indicated for each CC / for each BWP. The configuration/indication by the higher layer signaling may be configured/indicated for each set of available CCs/BWPs.

### <<Embodiment 9-7>>

Which of one TCI state or two TCI states of the two indicated TCI states is applied may be indicated/configured for the UE by higher layer signaling (RRC signaling / MAC CE) for each CSI-RS resource set / for each CSI-RS resource.

The configuration/indication by the higher layer signaling may be configured/indicated for each CC / for each BWP. The configuration/indication by the higher layer signaling may be configured/indicated for each set of available CCs/BWPs.

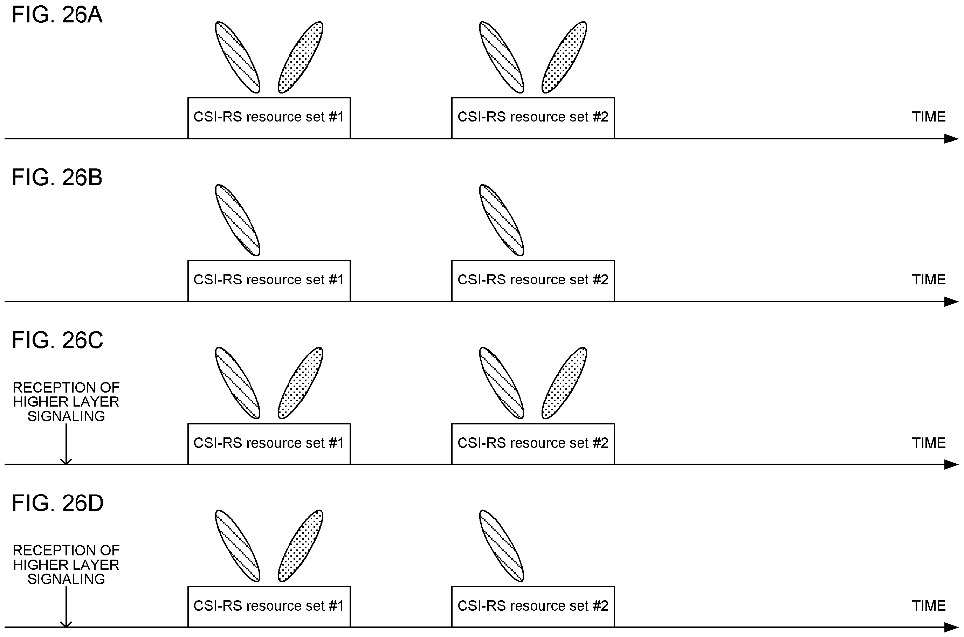

FIGS. 26A to 26D are diagrams to show examples of the TCI state application in the ninth embodiment. FIGS. 26A, 26B, 26C, and 26D correspond to Embodiments 9-4, 9-5, 9-6, and 9-7 above, respectively.

In an example shown in FIG. 26A, for CSI-RS resource sets, respective TCI states of the two TCI states correspond to each of the CSI-RS resource sets.

In an example shown in FIG. 26B, the UE applies one (same) TCI state to a plurality of CSI-RS resource sets.

In an example shown in FIG. 26C, which of Embodiment 9-4 or Embodiment 9-5 above is applied may be configured/indicated for the UE by using higher layer signaling (RRC signaling / MAC CE). In the example shown in FIG. 26C, the higher layer signaling configures application of Embodiment 9-4. Thus, respective TCI states of the two TCI states correspond to one CSI-RS resource set.

In an example shown in FIG. 26D, which TCI state is applied is configured/indicated for each CSI-RS resource set by using higher layer signaling. In the example shown in FIG. 26D, the higher layer signaling configures application of a first TCI state to CSI-RS resource set #1, and configures application of a second TCI state to CSI-RS resource set #2.

A plurality of CSI-RS resource pairs (CMR pairs) may be configured for the UE. The plurality of CSI-RS resource pairs may be CSI-RS resource pairs for CSI for multi-TRP.

For the TCI state determination, the UE may follow at least one of Embodiment 9-8 to Embodiment 9-13 below.

### <<Embodiment 9-8>>

The joint TCI states / separate DL TCI states may not be applicable to a CSI-RS.

The UE may assume that the joint TCI states / separate DL TCI states are not applied to the CSI-RS.

### <<Embodiment 9-9>>

When two CSI-RS resource sets are configured as a default, two TCI states may be applied to the two respective CSI-RS resource sets.

When a CSI-RS resource pair is configured, the UE may apply two TCI states to two respective CSI-RS resources in one pair.

In this case, one TCI state may correspond to one CSI-RS resource.

### <<Embodiment 9-10>>

As a default, one TCI state may be applied to two CSI-RS resources in one pair.

The UE may apply one TCI state to reception of the CSI-RS.

The UE may assume that one TCI state is indicated for reception of the CSI-RS.

### <<Embodiment 9-11>>

Which of one TCI state or two TCI states of the two indicated TCI states is applied may be indicated/configured for the UE by higher layer signaling (RRC signaling / MAC CE).

Which of Embodiment 9-9 or Embodiment 9-10 above is applied may be configured/indicated for the UE by using the higher layer signaling (RRC signaling / MAC CE).

The configuration/indication by the higher layer signaling may be configured/indicated for each CC / for each BWP. The configuration/indication by the higher layer signaling may be configured/indicated for each set of available CCs/BWPs.

### <<Embodiment 9-12>>

Which of one TCI state or two TCI states of the two indicated TCI states is applied may be indicated/configured for the UE by higher layer signaling (RRC signaling / MAC CE) for each CSI-RS resource / for each CSI-RS resource pair.

Which of Embodiment 9-9 or Embodiment 9-10 above is applied may be configured/indicated for the UE by using the higher layer signaling (RRC signaling / MAC CE).

The configuration/indication by the higher layer signaling may be configured/indicated for each CC / for each BWP. The configuration/indication by the higher layer signaling may be configured/indicated for each set of available CCs/BWPs.

### <<Embodiment 9-13>>

Which of one TCI state or two TCI states of the two indicated TCI states is applied may be indicated/configured for the UE by higher layer signaling (RRC signaling / MAC CE) for each CSI-RS resource.

The configuration/indication by the higher layer signaling may be configured/indicated for each CC / for each BWP. The configuration/indication by the higher layer signaling may be configured/indicated for each set of available CCs/BWPs.

One joint TCI state / separate DL TCI state may be indicated for the UE.

For the UE, a plurality of CSI-RS resources may be configured in one resource setting / report setting.

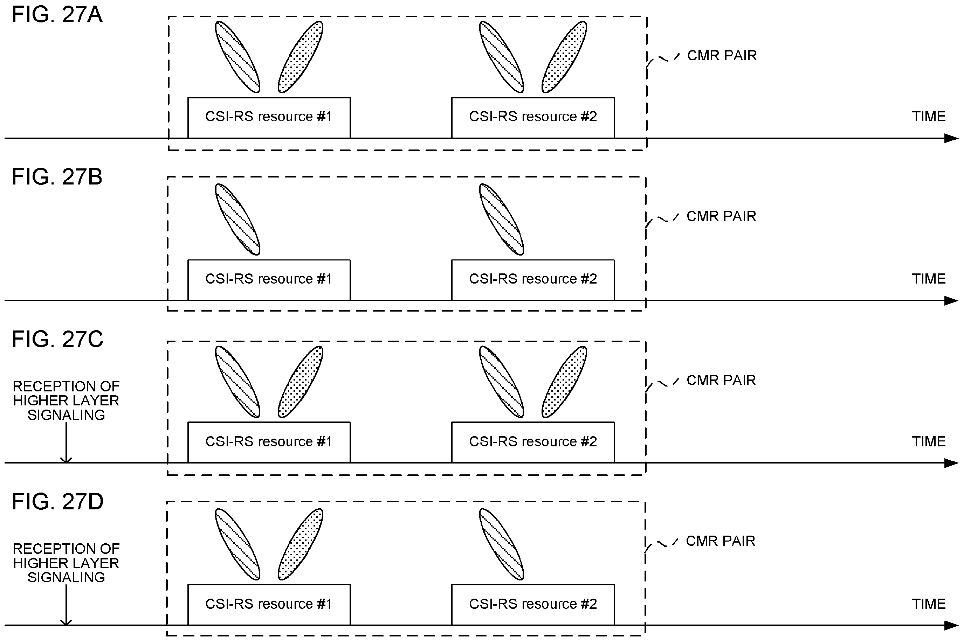

FIGS. 27A to 27D are diagrams to show other examples of the TCI state application in the ninth embodiment. FIGS. 27A, 27B, 27C, and 27D correspond to Embodiments 9-9, 9-10, 9-11/9-12, and 9-13 above, respectively.

In an example shown in FIG. 27A, for CSI-RS resources in one CMR pair, respective TCI states of the two TCI states correspond to each of the CSI-RS resources.

In an example shown in FIG. 27B, the UE applies one (same) TCI state to a plurality of CSI-RS resources in one CMR pair.

In an example shown in FIG. 27C, which of Embodiment 9-9 or Embodiment 9-10 above is applied in one CMR pair may be configured/indicated for the UE by using higher layer signaling (RRC signaling / MAC CE). In the example shown in FIG. 27C, the higher layer signaling configures application of Embodiment 9-9. Thus, respective TCI states of the two TCI states correspond to one CSI-RS resource in one CMR pair.

In an example shown in FIG. 27D, which TCI state is applied is configured/indicated for each CSI-RS resource in one CMR pair by using higher layer signaling. In the example shown in FIG. 27D, the higher layer signaling configures application of a first TCI state to CSI-RS resource #1, and configures application of a second TCI state to CSI-RS resource #2.

When, for the UE, one joint TCI state / separate DL TCI state is indicated and a plurality of CSI-RS resources are configured in one resource setting / report setting, for the TCI state determination, the UE may follow at least one of Embodiment 9-14 and Embodiment 9-15 below.

### <<Embodiment 9-14>>

The joint TCI states / separate DL TCI states may not be applicable to a CSI-RS.

The UE may assume that the joint TCI states / separate DL TCI states are not applied to the CSI-RS.

### <<Embodiment 9-15>>

The UE may apply one TCI state to a CSI-RS resource included in a plurality of (for example, all) CSI-RS resource sets.

The UE may assume that one TCI state is indicated for the CSI-RS resource included in the plurality of (for example, all) CSI-RS resource sets.

### <<Mapping of CSI-RS>>

In at least one of Embodiments 9-1 to 9-13 mentioned above, if two TCI states are applied, the two TCI states may correspond to a specific CSI-RS.

The UE may apply a first TCI state and a second TCI state indicated in a common TCI state to a first CSI-RS resource set / CSI-RS resource and a second CSI-RS resource / CSI-RS resource, respectively.

The UE may apply a first TCI state and a second TCI state indicated in the common TCI state to a CSI-RS resource set / CSI-RS resource corresponding to a lower CSI-RS resource set ID / group ID / TRP ID and a CSI-RS resource set / CSI-RS resource corresponding to a higher CSI-RS resource set ID / group ID / TRP ID, respectively.

The UE may apply a TCI state with a lower TCI state ID and a TCI state with a higher TCI state ID indicated in the common TCI state to a first CSI-RS resource set / CSI-RS resource and a second CSI-RS resource / CSI-RS resource, respectively.

The UE may apply a TCI state with a lower TCI state ID and a TCI state with a higher TCI state ID indicated in the common TCI state to a CSI-RS resource set / CSI-RS resource corresponding to a lower CSI-RS resource set ID / group ID / TRP ID and a CSI-RS resource set / CSI-RS resource corresponding to a higher CSI-RS resource set ID / group ID / TRP ID, respectively.

Note that in the present disclosure, "first" and "second" may be interchangeably interpreted. In the present disclosure, "lower" and "higher" may be interchangeably interpreted.

In at least one of Embodiments 9-1 to 9-15 mentioned above, one (same) TCI state may be applied to a plurality of CSI-RS resource sets / CSI-RS resources.

In this case, the UE may determine the one TCI state, based on a specific rule.

For example, when two TCI states are indicated for the UE, the UE may determine that one TCI state to be applied to a CSI-RS resource set / CSI-RS resource is at least one of a first TCI state, a second TCI state, a TCI state with a lower TCI state ID, and a TCI state with a higher TCI state ID.

In this case, the UE may determine the one TCI state, based on higher layer signaling (RRC signaling / MAC CE).

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

In at least one of Embodiments 9-1 to 9-15 mentioned above, one TCI state may be applied to a plurality of CSI-RS resource sets / CSI-RS resources.

In this case, the UE may determine the one TCI state, based on a specific rule.

For example, when two TCI states are indicated for the UE, the UE may determine that one TCI state to be applied to a CSI-RS resource set / CSI-RS resource is at least one of a first TCI state, a second TCI state, a TCI state with a lower TCI state ID, and a TCI state with a higher TCI state ID.

In this case, the UE may determine the one TCI state, based on higher layer signaling (RRC signaling / MAC CE).

Configuration/indication by the higher layer signaling (RRC signaling / MAC CE) may be configured/indicated for each CC / for each BWP. Configuration/indication by the higher layer signaling (RRC signaling / MAC CE) may be configured/indicated for each set of available CCs/BWPs.

Note that the CSI-RS in the ninth embodiment may be at least one of a periodic CSI-RS, a semi-persistent CSI-RS, and an aperiodic CSI-RS. The CSI-RS in the ninth embodiment may be at least one of a CSI-RS for beam management and a CSI-SRS for channel state information (CSI).

Note that in the ninth embodiment, different determination methods of the determination methods in Embodiments 9-1 to 9-15 may be applied to respective ones of a case where a joint DL/UL TCI state is configured and a case where a separate DL TCI state is configured.

In the ninth embodiment, one CSI-RS with a plurality of TCI states may be configured. The UE may receive, from a plurality of (for example, two) TRPs, a CSI-RS with an SFN.

According to the ninth embodiment above, it is possible to appropriately control application of a unified TCI state to a CSI-RS.

### <Other Embodiments>

A higher layer parameter (RRC IE) / UE capability corresponding to a function (characteristics, feature) in at least one of a plurality of embodiments above may be defined. The UE capability may indicate support of this function.

The UE configured with the higher layer parameter (for enabling the function) corresponding to the function may perform the function. "The UE not configured with the higher layer parameter corresponding to the function does not perform the function (for example, follows Rel. 15/16)" may be defined.

The UE that has reported the UE capability indicating support of the function may perform the function. "The UE that has not reported the UE capability indicating support of the function does not perform the function (for example, follows Rel. 15/16)" may be defined.

When the UE reports the UE capability indicating support of the function and is configured with the higher layer parameter corresponding to the function, the UE may perform the function. "When the UE does not report the UE capability indicating support of the function or when the UE is not configured with the higher layer parameter corresponding to the function, the UE does not perform the function (for example, follows Rel. 15/16)" may be defined.

The UE capability may indicate whether the UE supports this function.

The function may be application of a common/unified TCI state.

The function may be application of a joint DL/UL TCI state.

The function may be application of a separate DL/UL TCI state.

The UE capability may be defined as whether the UE supports a joint DL/UL TCI state (mode).

The UE capability may be defined as whether the UE supports a joint DL/UL TCI state (mode) with M = 1, N = 2.

The UE capability may be defined as whether the UE supports a joint DL/UL TCI state (mode) with M = 2, N = 1.

The UE capability may be defined as whether the UE supports a separate DL/UL TCI state (mode).

The UE capability may be defined as whether the UE supports a separate DL/UL TCI state with M = 1, N = 2.

The UE capability may be defined as whether the UE supports a separate DL/UL TCI state with M = 2, N = 1.

The UE capability may be defined as whether the UE supports dynamic/semi-static switching of a joint DL/UL TCI state (mode).

The UE capability may be defined as whether the UE supports dynamic/semi-static switching of a separate DL/UL TCI state (mode).

In the present disclosure, the dynamic/semi-static switching may mean switching based on RRC signaling / MAC CE / DCI.

The UE capability may be defined as whether the UE supports dynamic/semi-static switching of at least one of a joint DL/UL TCI state (mode) and a separate DL/UL TCI state (mode) in at least two of cases below:
- M = 1, N = 1
- M = 2, N = 2
- M = 2, N = 1
- M = 2, N = 2

The UE capability may be defined as whether the UE supports application of a unified TCI state to a PDSCH/PUSCH/PDCCH/PUCCH for single TRP in a case where a plurality of DL TCI states / plurality of UL TCI states / plurality of joint TCI states are indicated in a unified TCI state framework.

The UE capability may be defined as whether the UE supports application of a unified TCI state to a PDSCH/PUSCH/PUCCH for single DCI-based multi-TRP in a case where a plurality of DL TCI states / plurality of UL TCI states / plurality of joint TCI states are indicated in a unified TCI state framework.

The UE capability may be defined as whether the UE supports application of a unified TCI state to an SFN PDSCH/PDCCH in a case where a plurality of DL TCI states / plurality of UL TCI states / plurality of joint TCI states are indicated in a unified TCI state framework.

The UE capability may be defined as whether the UE supports application of a unified TCI state to PDCCH repetition transmission (repetition) for single TRP / multi-TRP in a case where a plurality of DL TCI states / plurality of UL TCI states / plurality of joint TCI states are indicated in a unified TCI state framework.

The UE capability may be defined as whether the UE supports application of a unified TCI state to a PUSCH for multi-panel in a case where a plurality of DL TCI states / plurality of UL TCI states / plurality of joint TCI states are indicated in a unified TCI state framework.

The UE capability may be defined as whether the UE supports dynamic/semi-static switching of a PDSCH/PUSCH/PDCCH/PUCCH for single TRP / multi-TRP.

The UE capability may be defined as whether the UE supports dynamic/semi-static switching of a PUSCH for a single panel / multi-panel.

The UE capability may be defined as whether the UE supports application of a unified TCI state to an SRS in a case where one SRS resource set is configured, in a case where a plurality of DL TCI states / plurality of UL TCI states / plurality of joint TCI states are indicated in a unified TCI state framework.

The UE capability may be defined as whether the UE supports application of a unified TCI state to an SRS in a case where a plurality of SRS resources are configured, in a case where a plurality of DL TCI states / plurality of UL TCI states / plurality of joint TCI states are indicated in a unified TCI state framework.

The UE capability may be defined as whether the UE supports application of a unified TCI state to a CSI-RS in a case where one CSI-RS resource set is configured in one resource setting / report setting, in a case where a plurality of DL TCI states / plurality of UL TCI states / plurality of joint TCI states are indicated in a unified TCI state framework.

The UE capability may be defined as whether the UE supports application of a unified TCI state to a CSI-RS in a case where a plurality of CSI-RS resource sets are configured in one resource setting / report setting, in a case where a plurality of DL TCI states / plurality of UL TCI states / plurality of joint TCI states are indicated in a unified TCI state framework.

According to the other embodiments above, the UE can implement the above function while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

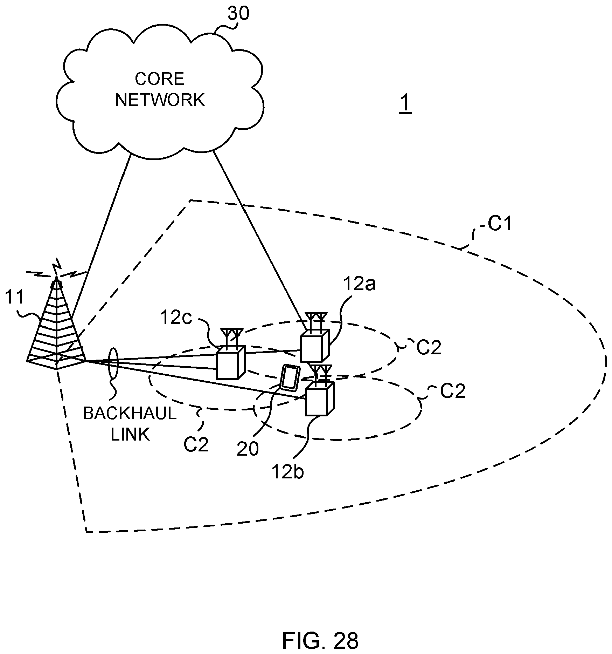

FIG. 28 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

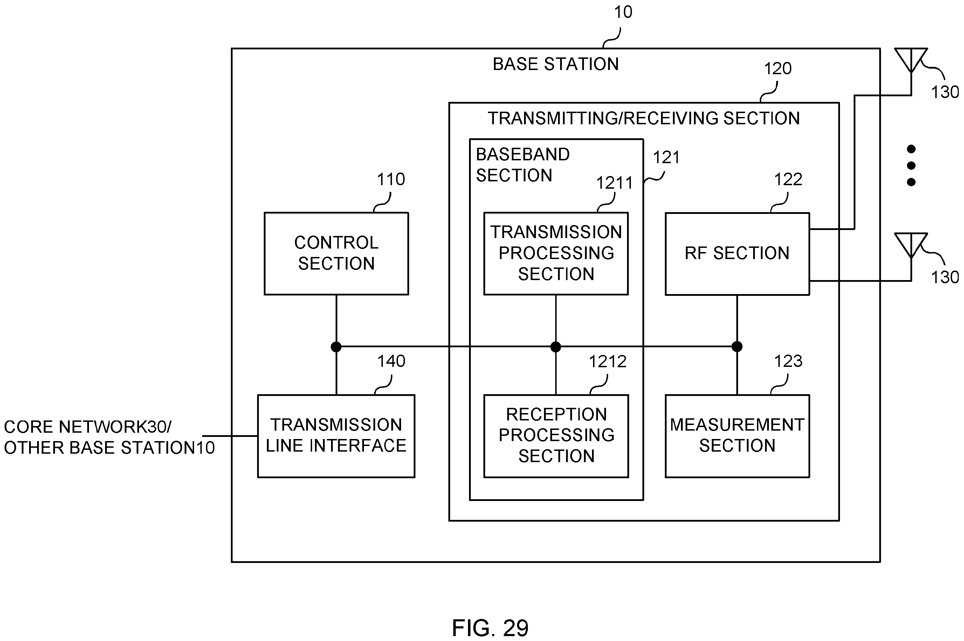

FIG. 29 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit downlink control information (DCI) for indicating a transmission configuration indication (TCI) state applicable to a plurality of signals. When the number of TCI states (joint TCI states / separate DL TCI states) indicated for a downlink (DL) signal included in the plurality of signals is different from the number of TCI states (joint TCI states / separate UL TCI states) indicated for an uplink (UL) signal included in the plurality of signals, the control section 110 may determine a TCI state to be applied to the DL signal and a TCI state to be applied to the UL signal (first and second embodiments).

The transmitting/receiving section 120 may transmit downlink control information (DCI) for indicating a transmission configuration indication (TCI) state applicable to a plurality of signals. When the number of TCI states (joint TCI states / separate DL TCI states) indicated for a downlink (DL) channel included in the plurality of signals is plural, the control section 110 may determine the number of TCI states to be applied to the DL channel, based on at least one of higher layer signaling, specific DCI, and a specific control resource set (third, fifth, and sixth embodiments).

The transmitting/receiving section 120 may transmit downlink control information (DCI) for indicating a transmission configuration indication (TCI) state applicable to a plurality of signals. When the number of TCI states indicated for an uplink (UL) channel included in the plurality of signals is plural, the control section 110 may determine the number of TCI states (joint TCI states / separate UL TCI states) applied to the UL channel, based on at least one of higher layer signaling and specific DCI (fourth and seventh embodiments).

The transmitting/receiving section 120 may transmit configuration information for a resource set of at least one of a sounding reference signal (SRS) and a channel state information reference signal (CSI-RS), and downlink control information (DCI) for indicating a transmission configuration indication (TCI) state applicable to a plurality of signals including at least one of the SRS and the CSI-RS. The control section 110 may determine, based on the number of at least one of resource sets of the SRS and resource sets of the CSI-RS, a TCI state to be applied to at least one of the SRS and the CSI-RS (eighth and ninth embodiments).

### (User Terminal)

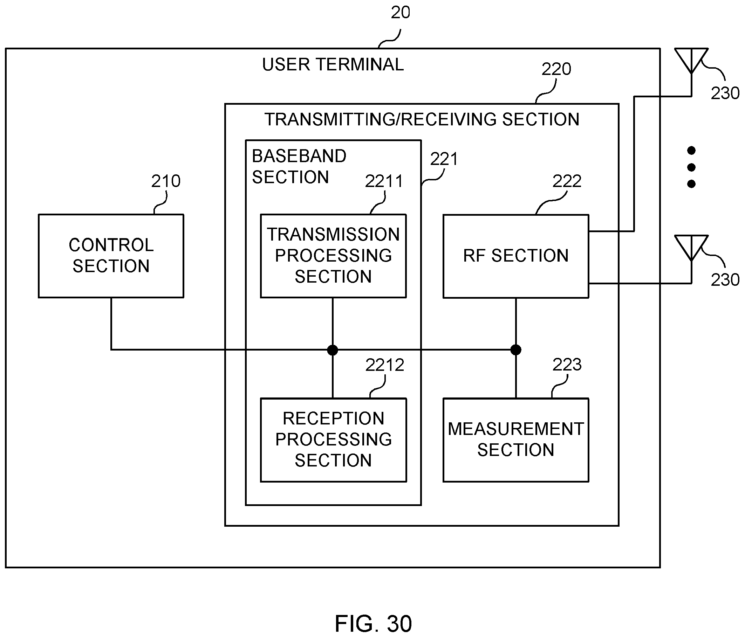

FIG. 30 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink control information (DCI) for indicating a transmission configuration indication (TCI) state applicable to a plurality of signals. When the number of TCI states (joint TCI states / separate DL TCI states) indicated for a downlink (DL) signal included in the plurality of signals is different from the number of TCI states (joint TCI states / separate UL TCI states) indicated for an uplink (UL) signal included in the plurality of signals, the control section 210 may determine a TCI state to be applied to the DL signal and a TCI state to be applied to the UL signal (first and second embodiments).

The number of TCI states to be applied to the DL signal may be based on a transmission scheme applied to the DL signal. The number of TCI states to be applied to the UL signal may be based on a transmission scheme applied to the UL signal (first and second embodiments).

The control section 210 may determine, based on at least one of higher layer signaling and the DCI, a TCI state to be applied to the DL signal and a TCI state to be applied to the UL signal (first and second embodiments).

The control section 210 may determine, based on a field included in the DCI, the number of TCI states to be applied to the DL signal and the number of TCI states to be applied to the UL signal (first and second embodiments).

The transmitting/receiving section 220 may receive downlink control information (DCI) for indicating a transmission configuration indication (TCI) state applicable to a plurality of signals. When the number of TCI states (joint TCI states / separate DL TCI states) indicated for a downlink (DL) channel included in the plurality of signals is plural, the control section 210 may determine the number of TCI states to be applied to the DL channel, based on at least one of higher layer signaling, specific DCI, and a specific control resource set (third, fifth, and sixth embodiments).

The DL channel may be a physical downlink shared channel (PDSCH). The specific DCI may be DCI for scheduling the PDSCH (third embodiment).

The DL channel may be a physical downlink control channel (PDCCH). The specific control resource set may be a control resource set corresponding to the PDCCH (fifth and sixth embodiments).

When a plurality of the DL channels are transmitted, the control section 210 may determine correspondence between each of the indicated TCI states and each of the plurality of transmitted DL channels (third, fifth, and sixth embodiments).

The transmitting/receiving section 220 may receive downlink control information (DCI) for indicating a transmission configuration indication (TCI) state applicable to a plurality of signals. When the number of TCI states (joint TCI states / separate UL TCI states) indicated for an uplink (UL) channel included in the plurality of signals is plural, the control section 210 may determine the number of TCI states to be applied to the UL channel, based on at least one of higher layer signaling and specific DCI (fourth and seventh embodiments).

The UL channel may be a physical uplink shared channel (PUSCH). The specific DCI may be DCI for scheduling the PUSCH (fourth embodiment).

The UL channel may be a physical uplink control channel (PUCCH). The higher layer signaling may configure the number of TCI states to be applied for each PUCCH resource (seventh embodiment).

When a plurality of the UL channels are transmitted, the control section 210 may determine correspondence between each of a plurality of the indicated TCI states and each of the plurality of transmitted UL channels (fourth and seventh embodiments).

The transmitting/receiving section 220 may receive configuration information for a resource set of at least one of a sounding reference signal (SRS) and a channel state information reference signal (CSI-RS), and downlink control information (DCI) for indicating a transmission configuration indication (TCI) state applicable to a plurality of signals including at least one of the SRS and the CSI-RS. The control section 210 may determine, based on the number of at least one of resource sets of the SRS and resource sets of the CSI-RS, a TCI state to be applied to at least one of the SRS and the CSI-RS (eighth and ninth embodiments).

The control section 210 may determine application of the indicated TCI state to at least one of the SRS and the CSI-RS, based on higher layer signaling (eighth and ninth embodiments).

The control section 210 may determine application of the indicated TCI state to at least one of the SRS and the CSI-RS, for each resource set of the SRS and for each resource set of the CSI-RS, based on higher layer signaling (eighth and ninth embodiments).

When at least one of the SRS and the CSI-RS is transmitted more than one, the control section 210 may determine correspondence between each of the indicated TCI states and each of at least one of the SRS transmitted more than one and the CSI-RS transmitted more than one(eighth and ninth embodiments).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

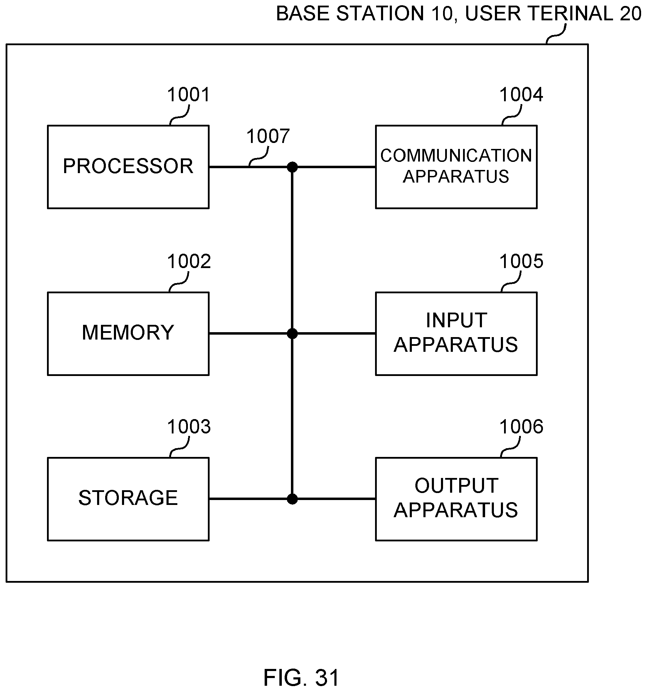

For example, a base station, a user terminal, and so on according to one embodiment of the present disclosure may function as a computer that executes the processes of the radio communication method of the present disclosure. FIG. 31 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

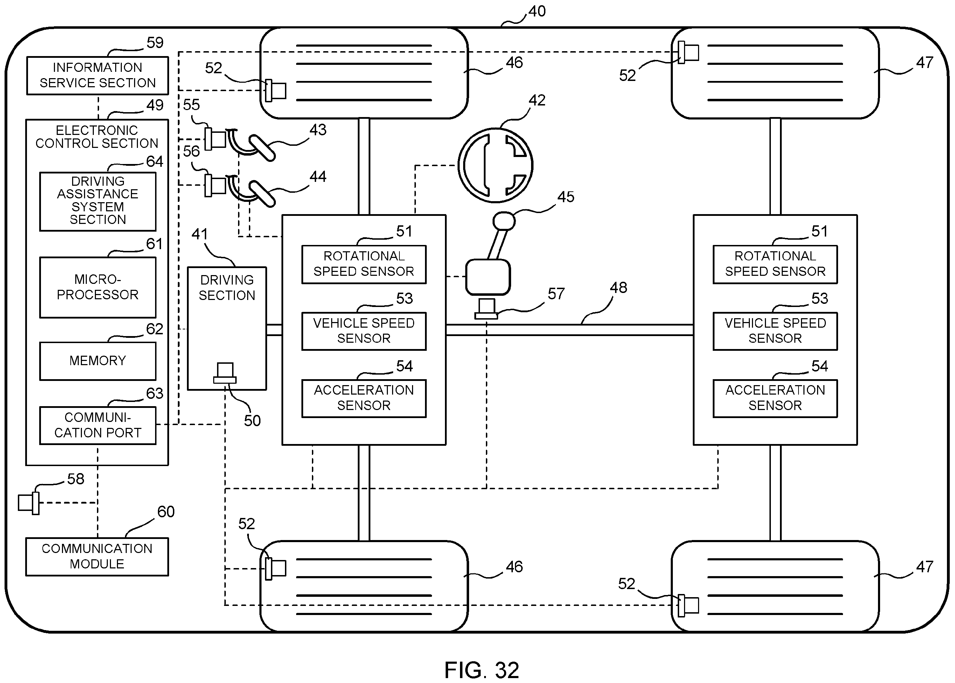

FIG. 32 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, the above-describe base station 10 or user terminal 20 or the like (may function as the base station 10 or user terminal 20 or the like).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives configuration information for a resource set of at least one of a sounding reference signal (SRS) and a channel state information reference signal (CSI-RS), and downlink control information (DCI) for indicating a transmission configuration indication (TCI) state applicable to a plurality of signals including at least one of the SRS and the CSI-RS; and
a control section that determines, based on the number of at least one of resource sets of the SRS and resource sets of the CSI-RS, a TCI state to be applied to at least one of the SRS and the CSI-RS.

2. The terminal according to claim 1, wherein
the control section determines application of the indicated TCI state to at least one of the SRS and the CSI-RS, based on higher layer signaling.

3. The terminal according to claim 1, wherein
the control section determines application of the indicated TCI state to at least one of the SRS and the CSI-RS, for each resource set of the SRS and for each resource set of the CSI-RS, based on higher layer signaling.

4. The terminal according to claim 1, wherein
when at least one of the SRS and the CSI-RS is transmitted more than one, the control section determines correspondence between each of the indicated TCI states and each of at least one of the SRS transmitted more than one and the CSI-RS transmitted more than one.

5. A radio communication method for a terminal, the radio communication method comprising:
receiving configuration information for a resource set of at least one of a sounding reference signal (SRS) and a channel state information reference signal (CSI-RS), and downlink control information (DCI) for indicating a transmission configuration indication (TCI) state applicable to a plurality of signals including at least one of the SRS and the CSI-RS; and
determining, based on the number of at least one of resource sets of the SRS and resource sets of the CSI-RS, a TCI state to be applied to at least one of the SRS and the CSI-RS.

6. A base station comprising:
a transmitting section that transmits configuration information for a resource set of at least one of a sounding reference signal (SRS) and a channel state information reference signal (CSI-RS), and downlink control information (DCI) for indicating a transmission configuration indication (TCI) state applicable to a plurality of signals including at least one of the SRS and the CSI-RS; and
a control section that determines, based on the number of at least one of resource sets of the SRS and resource sets of the CSI-RS, a TCI state to be applied to at least one of the SRS and the CSI-RS.
